# EUROPEAN PATENT APPLICATION

(11) **EP 3 457 475 A1**
(43) Date of publication of application: **20.03.2019**
(21) Application number: 18193134.6
(22) Date of filing: 07.09.2018
(51) Int. Cl.: H01M 4/38, H01M 4/62

(54) **PROTECTIVE LAYERS FOR LITHIUM ELECTRODES**

(30) Priority: 15.09.2017 US 201762559020 P
(71) Applicant: BASF SE, 67056 Ludwigshafen am Rhein (DE); Sion Power Corporation, Tucson, AZ 85756 (US)
(72) Inventor: Schneider, Holger, 67059 Ludwigshafen (DE); Leitner, Klaus, 67056 Ludwigshafen (DE); Kulisch, Jörn, 67056 Ludwigshafen (DE); Safont-Sempere, Marina, 67056 Ludwigshafen (DE); Weiss, Thomas, 67056 Ludwigshafen (DE); Ren, Li Qun, Shanghai, Shanghai 200137 (CN); Mikhaylik, Yuriy V., Tucson, AZ 85756 (US); Colemann, Dave, Tucson, AZ 85756 (US); Laramie, Michael G., Tucson, AZ 85756 (US); Viner, Veronika G., Tucson, AZ 85756 (US)
(74) Representative: Eisenführ Speiser

(57) **Abstract**

Described are an article for producing an electrochemical cell, an electrochemical cell comprising said article, and a process for preparing said article.

## Description

Provided are an article for producing an electrochemical cell, an electrochemical cell comprising said article, and a process for preparing said article.

Advantages and novel features of the present invention will become apparent from the following detailed description of various non-limiting embodiments of the invention when considered in conjunction with the accompanying figures. In cases where the present specification and a document incorporated by reference include conflicting and/or inconsistent disclosure, the present specification shall control. If two or more documents incorporated by reference include conflicting and/or inconsistent disclosure with respect to each other, then the document having the later effective date shall control.

According to a first aspect, there is provided an article for producing an electrochemical cell, comprising
- a layer comprising lithium metal; and
- adjacent said layer comprising lithium metal, a composite protective layer comprising particles and a polymeric binder, wherein the particles comprise one or more materials selected from the group consisting of lithium transition metal oxides, titanium oxide, graphite, boron, boron carbide, silicon carbide, rare earth metal carbides, transition metal carbides, boron nitride, silicon nitride, rare earth metal nitrides, and transition metal nitrides.

The above-mentioned materials may be particularly suitable for intercalating lithium ions and/or reacting with lithium to form a composite protective layer with beneficial properties as described herein. The composite protective layer may contain lithium in the form of ions or in metallic form.

A composite protective layer as described herein may protect an electroactive material, e.g. lithium metal, to which it is adjacent, by, for example, reducing or preventing deleterious interactions of the electroactive material with an electrolyte in an electrochemical cell. The composite protective layer may be relatively impermeable to the electrolyte, and/or may eliminate or substantially reduce exposure of an electroactive material on which it is disposed to the electrolyte. A composite protective layer as described herein may have one or more other beneficial properties, such as having a low area-specific impedance, forming a stable solid electrolyte interface (SEI) with an electrolyte, promoting an even distribution of current at an electroactive material on which it is disposed, increasing the cycle life of an electrochemical cell in which it is positioned, and/or reducing plating through a separator present in an electrochemical cell in which it is positioned.

A composite protective layer as described herein comprises particles. The particles may comprise a material that is reactive with lithium, is capable of intercalating lithium ions, and/or comprises intercalated lithium ions. It is possible that the particles in the composite protective layer do not initially comprise lithium ions, or initially comprise lithium in a relatively low amount, and the composite protective layer may be "activated" by intercalation of lithium ions into the particles and/or by reaction of lithium with the particles such that the composite protective layer comprises (more) lithium ions or becomes (more) lithium-ion conductive at the conclusion of the activation process.

Activation of the particles of a composite protective layer as described herein by intercalation of lithium ions from a layer or material to which said composite protective layer is adjacent (e.g., an electroactive layer comprising lithium, an electroactive material comprising lithium) may result in an activated composite protective layer with one or more advantages. These advantages may include a more even current distribution, enhanced flexibility, and/or reduced brittleness. In some cases, it may be easier or more cost effective to deposit and/or process an unactivated composite protective layer (i.e. a composite protective layer which does not comprise lithium ions, or which comprises lithium ions in a relatively low amount) on another layer or on an electroactive material than to deposit and/or process an activated composite protective layer. Accordingly, it may be possible, easier and/or more cost effective to employ particles with a wider variety of chemical compositions and/or sizes, and/or to control the thickness of the composite protective layer using the methods and articles described herein compared to certain prior art methods or articles.

Preferably, said particles in said composite protective layer have an average diameter of less than or equal to 10 µm, preferably of at least 10 nm, further preferably of at least 15 nm. The average diameter of particles in a composite protective layer may be determined by imaging the particles with a scanning electron microscope (SEM). An image may be acquired at a magnification between about 10X to about 100,000X, depending on the overall dimensions of the plurality of particles. Those skilled in the art would be capable of selecting an appropriate magnification for imaging the sample. The diameter of an individual particle can be determined by calculating the volume of each particle, calculating the radius of a sphere that would enclose an equivalent volume, and calculating the radius of that sphere. The average diameter of the particles may be determined by taking the average of the individual particle diameters.

Preferably, in said composite protective layer the content of said polymeric binder is greater than or equal to 1 wt% and less than or equal to 50 wt%, based on the total weight of said composite protective layer.

Preferably, said polymeric binder is selected from the group consisting of block copolymers, preferably from the group consisting of styrene-butadiene rubbers.

Optionally, said composite protective layer further comprises one or more constituents selected from the group consisting of thickening agents, plasticizers, and inorganic fillers.

When present, said inorganic fillers are preferably selected from the group consisting of silica, boehmite and alumina.

Preferably the electronic conductivity of the composite protective layer is greater than or equal to 10⁻⁶S/cm.

In a first specific configuration, an article according to the above-mentioned first aspect comprises
- a first layer comprising lithium metal;
- adjacent said first layer comprising lithium metal, a composite protective layer as defined above, wherein preferably said composite protective layer has one, more or all of the above-mentioned preferred features
- a second layer comprising lithium metal adjacent said first layer comprising lithium metal, said second layer comprising lithium metal being positioned at a surface of the first layer comprising lithium metal opposite the composite protective layer.

In certain cases of said first specific configuration, said article comprises
- a first layer comprising lithium metal;
- adjacent said first layer comprising lithium metal, a composite protective layer as defined above, wherein preferably said composite protective layer has one, more or all of the above-mentioned preferred features;
- a second layer comprising lithium metal adjacent said first layer comprising lithium metal, said second layer comprising lithium metal being positioned at a surface of the first layer comprising lithium metal opposite the composite protective layer;
- a current collector layer adjacent said second layer comprising lithium metal.

Current collectors for electrochemical cells are known in the art. For details of current collector layers, see the detailed description provided further below.

In a second specific configuration, an article according to the above-mentioned first aspect comprises
- a layer comprising lithium metal;
- adjacent said layer comprising lithium metal, a composite protective layer as defined above, wherein preferably said composite protective layer has one, more or all of the above-mentioned preferred features;
- a polymer layer adjacent said composite protective layer, said polymer layer being positioned at a surface of the composite protective layer opposite the layer comprising lithium metal,
- a removable carrier adjacent said polymer layer, said removable carrier being positioned at a surface of the polymer layer opposite the composite protective layer.

In said second configuration of the article, the removable carrier is designated to be not incorporated into an electrochemical cell produced using said article, and the polymer layer functions as a release layer facilitating removal of the removable carrier.

Preferably, said polymer layer comprising one or more polymers selected from polymers which are swellable or soluble in an aprotic electrolyte comprising lithium ions. Suitable polymers as well as process for obtaining release layers comprising such polymers are disclosed in EP 2 471 128 and EP 2 973 779. Preferably, said polymers are selected from the group consisting of polysulfones, polyethersulfone, polyphenylsulfone, polyethersulfone-polyalkyleneoxide copolymers, polyphenylsulfone-polyalkyleneoxide copolymers, polyisobutylene, polyisobutylene succinic anhydride, polyisobutylene-polyalkyleneoxide copolymers, polyamide 6, polyvinylpyrrolidone, polyvinylpyrrolidone-polyvinylimidazole copolymers, polyvinylpyrrolidone-polyvinylactetate copolymers, maleinimide-vinylether copolymers, polyacrylamides, fluorinated polyacrylates, polyethylene-polyvinylalcohol copolymers, polyethylene-polyvinylacetate copolymers, polyvinylalcohol and polyvinylacetate copolymers, polyoxymethylene, polyvinylbutyral, polyureas, polymers based on photopolymerization of acrolein derivatives (CH₂=CR-C(O)R), polysulfone-polyalkylene oxide copolymers, polyvinylidene difluoride, and combinations thereof.

Alternatively, a release layer may be any layer that adheres relatively weakly to its neighboring layer, and accordingly is delaminated easily.

The removable carrier preferably comprises or consists of one or more materials selected from the group consisting of glass, polymers and metals. The removable carrier is typically in a form selected from the group consisting of foils, films, webs, panes and plates.

In certain cases of said second specific configuration, said article comprises
- a first layer comprising lithium metal;
- adjacent said first layer comprising lithium metal, a composite protective layer as defined above, wherein preferably said composite protective layer has one, more or all of the above-mentioned preferred features;
- a second layer comprising lithium metal adjacent said first layer comprising lithium metal, said second layer comprising lithium metal being positioned at a surface of the first layer comprising lithium metal opposite the composite protective layer;
- a polymer layer adjacent said composite protective layer, said polymer layer being positioned at a surface of the composite protective layer opposite the first layer comprising lithium metal, wherein preferably said polymer layer comprises one or more of the above-defined preferred polymers;
- a removable carrier adjacent said polymer layer, said removable carrier being positioned at a surface of the polymer layer opposite the composite protective layer.

Accordingly, said article comprises a sequence of layers which in the order of stacking consists of
- a second layer comprising lithium metal as defined above
- a first layer comprising lithium metal as defined above
- a composite protective layer as defined above
- a polymer layer as defined above
- a removable carrier as defined above.

More specifically, in certain cases of said second specific configuration, said article comprises
- a first layer comprising lithium metal;
- adjacent said first layer comprising lithium metal, a composite protective layer as defined above, wherein preferably said composite protective layer has one, more or all of the above-mentioned preferred features;
- a second layer comprising lithium metal adjacent said first layer comprising lithium metal, said second layer comprising lithium metal being positioned at a surface of the first layer comprising lithium metal opposite the composite protective layer;
- a current collector layer adjacent said second layer comprising lithium metal;
- a polymer layer adjacent said composite protective layer, said polymer layer being positioned at a surface of the composite protective layer opposite the first layer comprising lithium metal, wherein preferably said polymer layer comprises one or more of the above-defined preferred polymers;
- a removable carrier adjacent said polymer layer, said removable carrier being positioned at a surface of the polymer layer opposite the composite protective layer.

Accordingly, said article comprises a sequence of layers which in the order of stacking consists of
- a current collector as defined above
- a second layer comprising lithium metal as defined above
- a first layer comprising lithium metal
- a composite protective layer as defined above
- a polymer layer as defined above
- a removable carrier as defined above.

In a third specific configuration, an article according to the above-mentioned first aspect comprises
a layer comprising lithium metal;
- adjacent said layer comprising lithium metal, a composite protective layer as defined above, wherein preferably said composite protective layer has one, more or all of the above-mentioned preferred features;
- a polymer layer adjacent said composite protective layer, said polymer layer being positioned at a surface of the composite protective layer opposite the layer comprising lithium metal, said polymer layer comprising one or more polymers selected from polymers which are swellable or soluble in an aprotic electrolyte, wherein preferably said polymer layer comprises one or more of the above-defined preferred polymers;
- an electronically insulating porous layer adjacent said polymer layer, said electronically insulating porous layer being positioned at a surface of the polymer layer opposite the composite protective layer.

In said third configuration of the article, the electronically insulating porous layer is designed to function as a separator in a final electrochemical cell produced using said article. Separators for electrochemical cells are known in the art. For details of separators, see the detailed description provided further below.

In said third configuration of the article, said polymer layer (as defined above) is an auxiliary layer which allows for deposition of the composite protective layer without seepage into the pores of the separator.

In certain cases of said third specific configuration, said article comprises
- a first layer comprising lithium metal;
- adjacent said first layer comprising lithium metal, a composite protective layer as defined above, wherein preferably said composite protective layer has one, more or all of the above-mentioned preferred features;
- a second layer comprising lithium metal adjacent said first layer comprising lithium metal, said second layer comprising lithium metal being positioned at a surface of the first layer comprising lithium metal opposite the composite protective layer;
- a polymer layer adjacent said composite protective layer, said polymer layer being positioned at a surface of the composite protective layer opposite the first layer comprising lithium metal, said polymer layer comprising one or more polymers selected from polymers which are swellable or soluble in an aprotic electrolyte, wherein preferably said polymer layer comprises one or more of the above-defined preferred polymers;
- an electronically insulating porous layer adjacent said polymer layer, said electronically insulating porous layer being positioned at a surface of the polymer layer opposite the composite protective layer.

Accordingly, said article comprises a sequence of layers which in the order of stacking consists of
- a second layer comprising lithium metal as defined above
- a first layer comprising lithium metal as defined above
- a composite protective layer as defined above
- a polymer layer as defined above
- an electronically insulating porous layer as defined above.

More specifically, in certain cases of said third specific configuration, said article comprises
- a first layer comprising lithium metal;
- adjacent said first layer comprising lithium metal, a composite protective layer as defined above, wherein preferably said composite protective layer has one, more or all of the above-mentioned preferred features;
- a second layer comprising lithium metal adjacent said first layer comprising lithium metal, said second layer comprising lithium metal being positioned at a surface of the first layer comprising lithium metal opposite the composite protective layer
- a current collector layer adjacent said second layer comprising lithium metal
- a polymer layer adjacent said composite protective layer, said polymer layer being positioned at a surface of the composite protective layer opposite the first layer comprising lithium metal, said polymer layer comprising one or more polymers selected from polymers which are swellable or soluble in an aprotic electrolyte, wherein preferably said polymer layer comprises one or more of the above-defined preferred polymers;
- an electronically insulating porous layer adjacent said polymer layer, said electronically insulating porous layer being positioned at a surface of the polymer layer opposite the composite protective layer.

Accordingly, said article comprises a sequence of layers which in the order of stacking consists of
- a current collector
- a second layer comprising lithium metal as defined above
- a first layer comprising lithium metal as defined above
- a composite protective layer as defined above
- a polymer layer as defined above
- an electronically insulating porous layer as defined above.

In a fourth specific configuration, an article according to the above-mentioned first aspect comprises
- a layer comprising lithium metal;
- adjacent said layer comprising lithium metal, a composite protective layer as defined above, wherein preferably said composite protective layer has one, more or all of the above-mentioned preferred features;
- an electronically insulating porous layer adjacent said composite protective layer, said electronically insulating porous layer being positioned at a surface of the composite protective layer opposite the layer comprising lithium metal.

In said fourth configuration of the article, the electronically insulating porous layer is designed to function as a separator in a final electrochemical cell produced using said article. Separators for electrochemical cells are known in the art. For details of separators, see the detailed description provided further below.

In certain cases of said fourth specific configuration, said article comprises
- a first layer comprising lithium metal;
- adjacent said first layer comprising lithium metal, a composite protective layer as defined above, wherein preferably said composite protective layer has one, more or all of the above-mentioned preferred features;
- a second layer comprising lithium metal adjacent said first layer comprising lithium metal, said second layer comprising lithium metal being positioned at a surface of the first layer comprising lithium metal opposite the composite protective layer;
- an electronically insulating porous layer adjacent said composite protective layer, said electronically insulating porous layer being positioned at a surface of the composite protective layer opposite the first layer comprising lithium metal.

Accordingly, said article comprises a sequence of layers which in the order of stacking consists of
- a second layer comprising lithium metal as defined above
- a first layer comprising lithium metal as defined above
- a composite protective layer as defined above
- an electronically insulating porous layer as defined above.

More specifically, in certain cases of said fourth specific configuration, said article comprises
- a first layer comprising lithium metal;
- adjacent said first layer comprising lithium metal, a composite protective layer as defined above, wherein preferably said composite protective layer has one, more or all of the above-mentioned preferred features;
- a second layer comprising lithium metal adjacent said first layer comprising lithium metal, said second layer comprising lithium metal being positioned at a surface of the first layer comprising lithium metal opposite the composite protective layer;
- a current collector layer adjacent said second layer comprising lithium metal;
- an electronically insulating porous layer adjacent said composite protective layer, said electronically insulating porous layer being positioned at a surface of the composite protective layer opposite the first layer comprising lithium metal.

Accordingly, said article comprises a sequence of layers which in the order of stacking consists of
- a current collector as defined above
- a second layer comprising lithium metal as defined above
- a first layer comprising lithium metal as defined above
- a composite protective layer as defined above
- an electronically insulating porous layer as defined above.

In other cases of said fourth specific configuration, said article comprises
- a layer comprising lithium metal;
- adjacent said layer comprising lithium metal, a composite protective layer as defined above, wherein preferably said composite protective layer has one, more or all of the above-mentioned preferred features;
- an electronically insulating porous layer adjacent said composite protective layer, said electronically insulating porous layer being positioned at a surface of the composite protective layer opposite the layer comprising lithium metal;
- a polymer layer adjacent said electronically insulating porous layer, said polymer layer being positioned at a surface of the electronically insulating porous layer opposite the composite protective layer, wherein preferably said polymer layer comprises one or more of the above-defined preferred polymers;
- a removable carrier adjacent said polymer layer, said removable carrier being positioned at a surface of the polymer layer opposite the composite protective layer.

Herein the removable carrier is designated to be not incorporated into an electrochemical cell produced using said article, and the polymer layer functions as a release layer facilitating removal of the removable carrier. Herein the electronically insulating porous layer is designed to function as a separator in a final electrochemical cell produced using said article. Separators for electrochemical cells are known in the art. For details of separators, see the detailed description provided further below.

In yet other cases of said fourth specific configuration, said article comprises
- a first layer comprising lithium metal;
- adjacent said first layer comprising lithium metal, a composite protective layer as defined above, wherein preferably said composite protective layer has one, more or all of the above-mentioned preferred features;
- a second layer comprising lithium metal adjacent said first layer comprising lithium metal, said second layer comprising lithium metal being positioned at a surface of the first layer comprising lithium metal opposite the composite protective layer;
- an electronically insulating porous layer adjacent said composite protective layer, said electronically insulating porous layer being positioned at a surface of the composite protective layer opposite the first layer comprising lithium metal;
- a polymer layer adjacent said electronically insulating porous layer, said polymer layer being positioned at a surface of the electronically insulating porous layer opposite the composite protective layer, wherein preferably said polymer layer comprises one or more of the above-defined preferred polymers;
- a removable carrier adjacent said polymer layer, said removable carrier being positioned at a surface of the polymer layer opposite the composite protective layer.

Accordingly, said article comprises a sequence of layers which in the order of stacking consists of
- a second layer comprising lithium metal as defined above
- a first layer comprising lithium metal as defined above
- a composite protective layer as defined above
- an electronically insulating porous layer as defined above
- a polymer layer as defined above
- a removable carrier as defined above.

More specifically, in certain cases of said fourth specific configuration, said article comprises
- a first layer comprising lithium metal;
- adjacent said first layer comprising lithium metal, a composite protective layer as defined above, wherein preferably said composite protective layer has one, more or all of the above-mentioned preferred features;
- a second layer comprising lithium metal adjacent said first layer comprising lithium metal, said second layer comprising lithium metal being positioned at a surface of the first layer comprising lithium metal opposite the composite protective layer;
- a current collector layer adjacent said second layer comprising lithium metal;
- an electronically insulating porous layer adjacent said composite protective layer, said electronically insulating porous layer being positioned at a surface of the composite protective layer opposite the first layer comprising lithium metal;
- a polymer layer adjacent said electronically insulating porous layer, said polymer layer being positioned at a surface of the electronically insulating porous layer opposite the composite protective layer, wherein preferably said polymer layer comprises one or more of the above-defined preferred polymers;
- a removable carrier adjacent said polymer layer, said removable carrier being positioned at a surface of the polymer layer opposite the composite protective layer.

Accordingly, said article comprises a sequence of layers which in the order of stacking consists of
- a current collector as defined above
- a second layer comprising lithium metal as defined above
- a first layer comprising lithium metal as defined above
- a composite protective layer as defined above
- an electronically insulating porous layer as defined above
- a polymer layer as defined above
- a removable carrier as defined above.

In a fifth specific configuration, an article according to the above-mentioned first aspect comprises
- a first layer comprising lithium metal;
- adjacent said first layer comprising lithium metal, a composite protective layer as defined above, wherein preferably said composite protective layer has one, more or all of the above-mentioned preferred features;
- a second layer comprising lithium metal, said second layer comprising lithium metal being positioned at a surface of the composite protective layer opposite the first layer comprising lithium metal.

According to a second aspect, there is provided an electrochemical cell comprising an article according to the first aspect as defined above, with the exception of those configurations which comprise the above-defined removable carrier. According to an alternative of said second aspect, an electrochemical cell is provided which is produced using an article as defined above. In case said article comprises a polymer layer comprising one or more polymers selected from the group of polymers which are swellable or soluble in an aprotic electrolyte as defined above, in the electrochemical cell said polymers may be swollen or at least partially swollen, or dissolved or at least partially dissolved.

According to an alternative of said second aspect, said electrochemical cell comprises certain - but not necessary all - elements of an article according to the first aspect as defined above. In those cases, said cell comprises at least
- a layer comprising lithium metal;
- and adjacent said layer comprising lithium metal, a composite protective layer as defined above, wherein preferably said composite protective layer has one, more or all of the above-mentioned preferred features.

According to a third aspect, there is provided the use of an article according to the first aspect as defined above for producing an electrochemical cell.

According to a fourth aspect, there is provided a process of forming an article for producing an electrochemical cell.

In a first alternative, said process comprises
- providing a substrate
- forming on a surface of said substrate a composite protective layer as defined above, wherein preferably said composite protective layer has one, more or all of the above-mentioned preferred features
- and forming a layer comprising lithium metal adjacent said composite protective layer at a surface of the composite protective layer opposite the substrate.

In a second alternative, said process comprises
- providing a substrate
- forming on a surface of said substrate a layer comprising lithium metal and forming a composite protective layer as defined above adjacent said layer comprising lithium metal at a surface of the layer comprising lithium metal opposite the substrate.

Preferably, forming said composite protective layer comprises
- depositing a slurry or paste comprising said particles, said polymeric binder and a removable carrier liquid,
- removing said carrier liquid to form a composite protective layer on said substrate.

Techniques for preparing slurries and depositing slurries onto substrates are known in the art. For further details, see the detailed description provided further below.

Preferably, forming said layer comprising lithium comprises
- depositing, onto the surface of the composite protective layer opposite the substrate, lithium metal from a vapor comprising lithium metal.

In certain cases, in the above-defined process a composite protective layer is formed which includes less than 70 wt% lithium based on the total weight of said composite protective layer, and lithium ions are intercalated into the particles in said composite protective layer from the layer comprising lithium metal adjacent said composite protective layer, and/or the particles in said composite protective layer react with lithium metal from the layer comprising lithium metal adjacent said composite protective layer.

The article to be prepared by the above defined process may have any of the specific configurations described above in the context of the first aspect.

A process suitable for preparing an article comprising a first layer comprising lithium metal and a second layer comprising lithium metal adjacent said first layer comprising lithium metal (as described above in the context of the first aspect) comprises
- providing a substrate
- forming on a surface of said substrate a composite protective layer as defined above, wherein preferably said composite protective layer has one, more or all of the above-mentioned preferred features
- forming a first layer comprising lithium metal adjacent said composite protective layer at a surface of the composite protective layer opposite the substrate
- providing a second layer comprising lithium metal deposited on a support
- laminating said second layer comprising lithium metal onto the first layer comprising lithium metal so that a surface of said first layer comprising lithium opposite said composite protective layer is positioned adjacent a surface of said second layer comprising lithium opposite said support.

In said process, the support may be in the form of a current collector as defined above.

In certain specific processes according to the above-mentioned fourth aspect, said substrate comprises a layer comprising lithium metal, and said composite protective layer is formed on a surface of said layer comprising lithium metal.

In certain specific processes according to the above-mentioned fourth aspect, said substrate comprises a polymer layer as defined above and a removable carrier adjacent said polymer layer, and said composite protective layer is formed on a surface of the polymer layer opposite the removable carrier. Such processes are suitable for preparing an article having the above-defined second configuration.

In certain specific processes according to the above-mentioned fourth aspect, said substrate comprises a polymer layer as defined above and an electronically insulating porous layer, and said composite protective layer is formed on a surface of the polymer layer opposite said electronically insulating porous layer. Such processes are suitable for preparing an article having the above-defined third configuration. Such process may further comprise exposing the composite protective layer to an electrolyte comprising lithium ions, for forming a stable solid electrolyte interface. For further details, see the detailed description provided further below.

In certain specific processes according to the above-mentioned fourth aspect, said substrate comprises an electronically insulating porous layer, and said composite protective layer is formed on a surface of the electronically insulating porous layer. Such processes are suitable for preparing an article having the above-defined fourth configuration. Such process may further comprise exposing the composite protective layer to an electrolyte comprising lithium ions, for forming a stable solid electrolyte interface. For further details, see the detailed description provided further below.

A process suitable for preparing an article having the above-defined fifth configuration comprises
- providing a substrate comprising a first layer comprising lithium metal deposited on a support
- forming on a surface of said substrate a composite protective layer as defined above, wherein preferably said composite protective layer has one, more or all of the above-mentioned preferred features
- and forming a second layer comprising lithium metal adjacent said composite protective layer at a surface of the composite protective layer opposite the first layer comprising lithium metal.

In said process, the support may be in the form of a current collector as defined above.

In said process, forming the second layer comprising lithium metal may comprise depositing lithium metal from a vapor comprising lithium metal onto the surface of the composite protective layer opposite the first layer comprising lithium metal.

Non-limiting embodiments of the present invention will be described by way of example with reference to the accompanying figures, which are schematic and are not intended to be drawn to scale. In the figures, each identical or nearly identical component illustrated is typically represented by a single numeral. For purposes of clarity, not every component is labeled in every figure, nor is every component of each embodiment of the invention shown where illustration is not necessary to allow those of ordinary skill in the art to understand the invention.

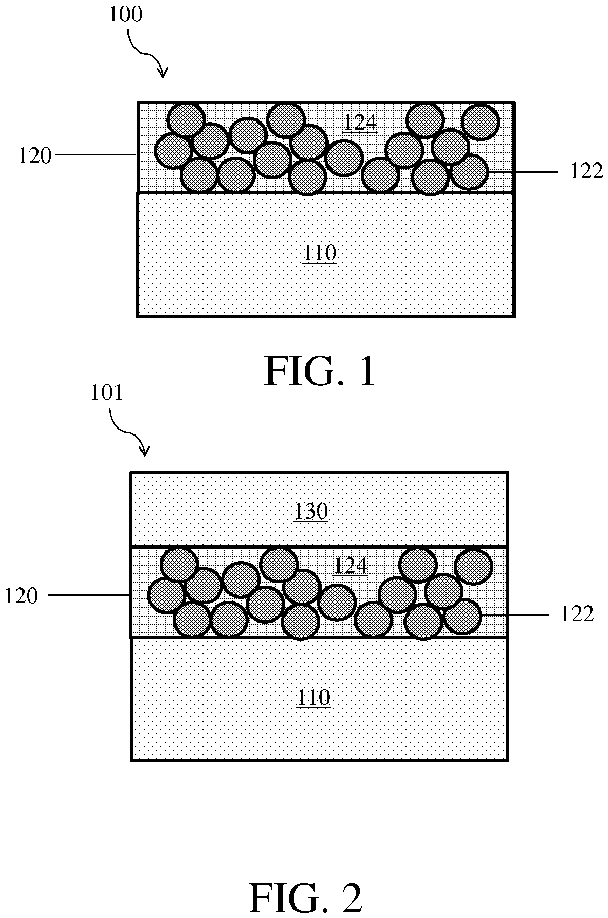

FIG. 1 shows an article 100 comprising a layer 110 comprising lithium metal and a composite protective layer 120. Composite protective layer 120 comprises particles 122 and a polymeric binder 124. The electroactive material may be in the form of a layer. In an electrochemical cell layer 110 functions as an electrode.

It should be appreciated that the figures shown herein are exemplary and that different configuration or arrangement of components is possible, too. For instance, the relationship between the thicknesses of the composite protective layer and electroactive layer, shown in FIG. 1 should not be taken to be limiting. These layers may have similar thicknesses, may have different thicknesses, and may have any suitable rank ordering of thicknesses with respect to each other.

Introduction of lithium ions into the particles within a composite protective layer may be enhanced by directly contacting an electroactive material comprising lithium metal with particles in the composite protective layer. Accordingly, the particles in the composite protective layer may be brought in direct contact with the electroactive material comprising lithium metal, which may facilitate the activation (e.g., intercalation of lithium ions, reaction with lithium) process.

Prior to the above-defined activation a composite protective layer as described herein and/or particles therein may include a relatively low amount of lithium ions. For example, lithium may make up less than or equal to 70 wt% of the composite protective layer, less than or equal to 60 wt% of the composite protective layer, less than or equal to 50 wt% of the composite protective layer, less than or equal to 40 wt% of the composite protective layer, less than or equal to 30 wt% of the composite protective layer, less than or equal to 20 wt% of the composite protective layer, or less than or equal to 10 wt% of the composite protective layer. For example, lithium ions may make up greater than or equal to 0 wt% of the composite protective layer, greater than or equal to 10 wt% of the composite protective layer, greater than or equal to 20 wt% of the composite protective layer, greater than or equal to 30 wt% of the composite protective layer, greater than or equal to 40 wt% of the composite protective layer, greater than or equal to 50 wt% of the composite protective layer, or greater than or equal to 60 wt% of the composite protective layer. Combinations of the above-referenced ranges are also possible (e.g., less than or equal to 70 wt% of the composite protective layer and greater than or equal to 0 wt% of the composite protective layer). Other ranges are also possible. The ranges above should be understood to refer to the solid portions of the composite protective layer (e.g., any binder, particles, and/or solid additives).

For example, lithium ions may make up less than or equal to 70 wt% of the particles in the composite protective layer, less than or equal to 60 wt% of the particles in the composite protective layer, less than or equal to 50 wt% of the particles in the composite protective layer, less than or equal to 40 wt% of the particles in the composite protective layer, less than or equal to 25 wt% of the particles in the composite protective layer, or less than or equal to 10 wt% of the particles in the composite protective layer. For example, lithium ions may make up greater than or equal to 0 wt% of the particles in the composite protective layer, greater than or equal to 10 wt% of the particles in the composite protective layer, greater than or equal to 25 wt% of the particles in the composite protective layer, greater than or equal to 40 wt% of the particles in the composite protective layer, greater than or equal to 50 wt% of the particles in the composite protective layer, or greater than or equal to 60 wt% of the particles in the composite protective layer. Combinations of the above-referenced ranges are also possible (e.g., less than or equal to 70 wt% of the particles in the composite protective layer and greater than or equal to 0 wt% of the particles in the composite protective layer, or less than or equal to 70 wt% of the particles in the composite protective layer and greater than or equal to 25 wt% of the particles in the composite protective layer). Other ranges are also possible.

Without wishing to be bound by theory, it is believed that a lower amount of lithium ions in the composite protective layer correlates with a low lithium ion conductivity of the composite protective layer (e.g., prior to activation of the composite protective layer). For example, the lithium ion conductivity of the composite protective layer may be less than or equal to 10⁻⁷ S/cm, less than or equal to 10⁻⁸ S/cm, or less than or equal to 10⁻⁹ S/cm. For example, the lithium ion conductivity of composite protective layer may be greater than or equal to 10⁻¹⁰ S/cm, greater than or equal to 10⁻⁹ S/cm, or greater than or equal to 10⁻⁸ S/cm. Combinations of the above-referenced ranges are also possible (e.g., greater than or equal to 10⁻¹⁰ S/cm and less than or equal to 10⁻⁷ S/cm). Other ranges are also possible.

The electronic and ionic conductivity of the composite protective layer is measured by electrochemical impedance spectroscopy (EIS), and is measured in a direction corresponding to the direction through which ions are transported through the composite protective layer during operation of the electrochemical cell. In some cases, for electrochemical impedance spectroscopy measurements a measurement cell is assembled in which the layer that is being measured (such as, e.g., the composite protective layer) is positioned between two electronically conductive substrates. In other cases, such as for layers which may be challenging to isolate from an electrochemical cell, electrochemical impedance spectroscopy measurements are made on an electrochemical cell including the layer of interest and other layers, comparison measurements are made on an otherwise equivalent electrochemical cell lacking the layer of interest. In such cases, the measured impedance attributable to the layer of interest is determined by subtracting the measured impedance of the electrochemical cell lacking the layer of interest from the electrochemical cell including the layer of interest. The complex impedance across the layer (which has known dimensions) or cell is determined by superimposing an alternating voltage having an amplitude of 5 mV alternating voltage versus an open circuit voltage across the electronically conductive substrates resp. the cell and measuring the real and imaginary impedance between the electronically conductive substrates as a function of frequency between 100 kHz and 20 mHz. Layers which have both electrical and lithium ion conductivity will typically display a low frequency relaxation arising from electronic conductivity and a high frequency relaxation arising from both electronic and lithium ion conductivity. The low frequency relaxation may be used to determine the electrical resistance of the layer, from which the electrical conductivity can be calculated based on the geometry of the layer. The high frequency relaxation may then be used to determine the lithium ion conductivity of the layer by assuming that the ionic resistance of the layer and the electronic resistance of the layer act in parallel and then calculating the ionic resistance that would give rise to the measured high frequency relaxation. The lithium ion conductivity may then be determined based on geometry of the layer. In this context, the geometry across which the electronic conductivity is measured is calculated using the geometric surfaces of the layer. The geometric surfaces of a layer would be understood by those of ordinary skill in the art as referring to the surfaces defining the outer boundaries of the layer, for example, the area that may be measured by a macroscopic measuring tool (e.g., a ruler), and do not include the internal surface area (e.g., area within pores of a porous material such as a porous membrane separator, etc.).

The composite protective layer and/or particles therein may contain a relatively high amount of lithium ions (in some cases at least after the above-described activation process took place). For instance, the particles of the composite protective layer may be particles that contain lithium ions in a relatively high amount prior to reacting with and/or intercalating lithium ions, and/or lithium may have intercalated into and/or reacted with particles that initially included lithium ions in a relatively low amount. For example, lithium ions may make up greater than or equal to 75 wt % of the composite protective layer, greater than or equal to 80 wt% of the composite protective layer, greater than or equal to 85 wt% of the composite protective layer, or greater than or equal to 90 wt% of the composite protective layer. For example, lithium ions may make up less than or equal to 95 wt% of the composite protective layer, less than or equal to 90 wt% of the composite protective layer, less than or equal to 85 wt% of the composite protective layer, or less than or equal to 80 wt% of the composite protective layer. Combinations of the above-referenced ranges are also possible (e.g., greater than or equal to 75 wt% and less than or equal to 95 wt% of the composite protective layer). Other ranges are also possible.

Lithium ions may make up greater than or equal to 75 wt% of the particles in the composite protective layer, greater than or equal to 78 wt% of the particles in the composite protective layer, greater than or equal to 80 wt% of the particles in the composite protective layer, greater than or equal to 82 wt% of the particles in the composite protective layer, greater than or equal to 84 wt% of the particles in the composite protective layer, greater than or equal to 85 wt% of the particles in the composite protective layer, greater than or equal to 88 wt% of the particles in the composite protective layer, greater than or equal to 90 wt% of the particles in the composite protective layer, greater than or equal to 92 wt% of the particles in the composite protective layer, greater than or equal to 94 wt% of the particles in the composite protective layer, greater than or equal to 96 wt% of the particles in the composite protective layer, or greater than or equal to 97 wt% of the particles in the composite protective layer. Lithium ions may make up less than or equal to 98 wt% of the particles in the composite protective layer, less than or equal to 97 wt% of the particles in the composite protective layer, less than or equal to 96 wt% of the particles in the composite protective layer, less than or equal to 94 wt% of the particles in the composite protective layer, less than or equal to 92 wt% of the particles in the composite protective layer, less than or equal to 90 wt% of the particles in the composite protective layer, less than or equal to 88 wt% of the particles in the composite protective layer, less than or equal to 85 wt% of the particles in the composite protective layer, less than or equal to 84 wt% of the particles in the composite protective layer, less than or equal to 82 wt% of the particles in the composite protective layer, less than or equal to 80 wt% of the particles in the composite protective layer, or less than or equal to 78 wt% of the particles in the composite protective layer. Combinations of the above-referenced ranges are also possible (e.g., greater than or equal to 75 wt% of the particles in the composite protective layer and less than or equal to 98 wt% of the particles in the composite protective layer, greater than or equal to 75 wt% of the particles in the composite protective layer and less than or equal to 97 wt% of the particles in the composite protective layer, or greater than or equal to 75 wt% of the particles in the composite protective layer and less than or equal to 84 wt% of the particles in the composite protective layer). Other ranges are also possible.

The lithium ion conductivity of the composite protective layer (e.g., after activation) may be greater than or equal to 10⁻⁵ S/cm, greater than or equal to 10⁻⁴ S/cm, greater than or equal to 10⁻³ S/cm, greater than or equal to 10⁻² S/cm, or greater than or equal to 10⁻¹ S/cm. The lithium ion conductivity of the particles in the composite protective layer may be less than or equal to 10° S/cm, less than or equal to 10⁻¹ S/cm, less than or equal to 10⁻² S/cm, less than or equal to 10⁻³ S/cm, or less than or equal to 10⁻⁴ S/cm. Combinations of the above-referenced ranges are also possible (e.g., greater than or equal to 10⁻⁵ S/cm and less than or equal to 10° S/cm). Other ranges are also possible.

The amount of lithium ions in a composite protective layer may change by a relatively large amount during an activation process. The amount of lithium ions in a composite protective layer may increase by greater than or equal to 5%, greater than or equal to 10%, greater than or equal to 20%, greater than or equal to 50%, greater than or equal to 100%, greater than or equal to 200%, greater than or equal to 500%, greater than or equal to 1000%, greater than or equal to 2000%, or greater than or equal to 5000% during an activation process. The amount of lithium ions in a composite protective layer may increase by less than or equal to 10000%, less than or equal to 5000%, less than or equal to 2000%, less than or equal to 1000%, less than or equal to 500%, less than or equal to 200%, less than or equal to 100%, less than or equal to 50%, less than or equal to 20%, or less than or equal to 10% during an activation process. Combinations of the above-referenced ranges are also possible (e.g., greater than or equal to 5% and less than or equal to 10000%). Other ranges are also possible. As used herein, the percent change in the amount of lithium ions in the composite protective layer refers to the ratio of the increase in the weight of lithium in the composite protective layer to the initial weight of lithium in the composite protective layer. The percent change in the amount of lithium ions in the composite protective layer may be determined using X-ray photoelectron spectroscopy.

A relatively large amount of lithium ions may be added to the composite protective layer during an activation process. The added lithium may be a large fraction of the initial mass of the composite protective layer. For example, the amount of lithium ions added during an activation process may be greater than or equal to 0.5% of the initial mass of the composite protective structure, greater than or equal to 1% of the initial mass of the composite protective structure, greater than or equal to 2% of the initial mass of the composite protective structure, greater than or equal to 5% of the initial mass of the composite protective structure, greater than or equal to 10% of the initial mass of the composite protective structure, greater than or equal to15% of the initial mass of the composite protective structure, greater than or equal to 20% of the initial mass of the composite protective structure, or greater than or equal to 25% of the initial mass of the composite protective structure. For example, the amount of lithium ions added during an activation process may be less than or equal to 30% of the initial mass of the composite protective structure, less than or equal to 25% of the initial mass of the composite protective structure, less than or equal to 20% of the initial mass of the composite protective structure, less than or equal to 15% of the initial mass of the composite protective structure, less than or equal to 10% of the initial mass of the composite protective structure, less than or equal to 5% of the initial mass of the composite protective structure, less than or equal to 2% of the initial mass of the composite protective structure, or less than or equal to 1% of the initial mass of the composite protective structure. Combinations of the above-referenced ranges are also possible (e.g., greater than or equal to 1% and less than or equal to 30%, or greater than or equal to 2% and less than or equal to 15%). Other ranges are also possible. The amount of lithium ions added to the composite protective layer may be determined using X-ray photoelectron spectroscopy.

The amount of lithium ions in particles within a composite protective layer may change by a relatively large amount during an activation process. For example, the amount of lithium ions in the particles within a composite protective layer may increase by greater than or equal to 5%, greater than or equal to 10%, greater than or equal to 20%, greater than or equal to 50%, greater than or equal to 100%, greater than or equal to 200%, greater than or equal to 500%, greater than or equal to 1000%, greater than or equal to 2000%, or greater than or equal to 5000% during an activation process. For example, the amount of lithium ions in the particles within a composite protective layer may increase by less than or equal to 10000%, less than or equal to 5000%, less than or equal to 2000%, less than or equal to 1000%, less than or equal to 500%, less than or equal to 200%, less than or equal to 100%, less than or equal to 50%, less than or equal to 20%, or less than or equal to 10% during an activation process. Combinations of the above-referenced ranges are also possible (e.g., greater than or equal to 5% and less than or equal to 10000%). Other ranges are also possible. As used herein, the percent change in the amount of lithium in the particles within the composite protective layer refers to the ratio of the increase in the weight of lithium ions in the particles within the composite protective layer to the initial weight of lithium ions in the particles within the composite protective layer. The percent change in the amount of lithium ions in the particles within the composite protective layer may be determined using X-ray photoelectron spectroscopy.

The amount of lithium ions added to particles within a composite protective layer may be relatively high. For example, the amount of lithium ions added to the particles may be greater than or equal to 2% of the initial mass of the particles, greater than or equal to 5% of the initial mass of the particles, greater than or equal to 10% of the initial mass of the particles, greater than or equal to 20% of the initial mass of the particles, greater than or equal to 33% of the initial mass of the particles, greater than or equal to 50% of the initial mass of the particles, greater than or equal to 100% of the initial mass of the particles, greater than or equal to 200% of the initial mass of the particles, greater than or equal to 300% of the initial mass of the particles, greater than or equal to 500% of the initial mass of the particles, greater than or equal to 1000% of the initial mass of the particles, greater than or equal to 2000% of the initial mass of the particles, greater than or equal to 5000% of the initial mass of the particles, greater than or equal to 10000% of the initial mass of the particles, or greater than or equal to 20000% of the initial mass of the particles. For example, the amount of lithium ions added to the particles may be less than or equal to 49000% of the initial mass of the particles, less than or equal to 20000% of the initial mass of the particles, less than or equal to 10000% of the initial mass of the particles, less than or equal to 5000% of the initial mass of the particles, less than or equal to 2000% of the initial mass of the particles, less than or equal to 1000% of the initial mass of the particles, less than or equal to 500% of the initial mass of the particles, less than or equal to 300% of the initial mass of the particles, less than or equal to 200% of the initial mass of the particles, less than or equal to 100% of the initial mass of the particles, less than or equal to 50% of the initial mass of the particles, less than or equal to 33% of the initial mass of the particles, less than or equal to 20% of the initial mass of the particles, less than or equal to 10% of the initial mass of the particles, or less than or equal to 5% of the initial mass of the particles. Combinations of the above-referenced ranges are also possible (e.g., greater than or equal to 2% and less than or equal to 98%, or greater than or equal to 33% and less than or equal to 300%). Other ranges are also possible. The amount of lithium ions added to the particles may be determined using X-ray photoelectron spectroscopy.

The lithium ion conductivity of a composite protective layer may change by a relatively large amount during an activation process. For example, the lithium ion conductivity of the composite protective layer may increase by greater than or equal to 5%, greater than or equal to 10%, greater than or equal to 20%, greater than or equal to 50%, greater than or equal to 100%, greater than or equal to 200%, greater than or equal to 500%, greater than or equal to 1000%, greater than or equal to 2000%, or greater than or equal to 5000% during an activation process. For example, the lithium ion conductivity of the composite protective layer may increase by less than or equal to 10000%, less than or equal to 5000%, less than or equal to 2000%, less than or equal to 1000%, less than or equal to 500%, less than or equal to 200%, less than or equal to 100%, less than or equal to 50%, less than or equal to 20%, or less than or equal to 10% during an activation process. Combinations of the above-referenced ranges are also possible (e.g., greater than or equal to 5% and less than or equal to 10000%). Other ranges are also possible. The lithium ion conductivity of the composite protective layer may be determined by using EIS as described herein.

As shown illustratively in FIG. 1, the composite protective layer comprises a polymeric binder 124. A polymeric binder may increase the protective properties of the composite protective layer. For example, the polymeric binder may be relatively insoluble in common electrolytes such as electrolytes that include aprotic solvents, and/or may swell to a relatively low degree in common electrolytes such as electrolytes that include aprotic solvents. The polymeric binder may have any suitable composition as described in more detail below.

Upon or after exposure of the composite protective layer to an electrolyte, a stable solid electrolyte interface layer may be formed, as described in more detail below.

A composite protective layer may be positioned between two electroactive layers comprising lithium metal, or a second electroactive layer comprising lithium metal may be positioned on a side of the composite protective layer opposite a first electroactive layer. One example of a structure having this configuration is shown in FIG. 2, where article 101 comprises composite protective layer 120 that is adjacent both first electroactive layer 110 comprising lithium metal and second electroactive layer 130 comprising lithium metal. Composite protective layer 120 comprises particles 122 and polymeric binder 124. As described above, the relationship between the thicknesses of the composite protective layer, first electroactive layer, and second electroactive layer shown in FIG. 2 should not be taken to be limiting. These two layers may have similar thicknesses, may have different thicknesses, and may have any suitable rank ordering of thicknesses with respect to each other.

It should also be understood that when a layer is referred to as being "disposed on," "disposed between," "on," or "adjacent" another layer(s), it may be disposed on, disposed between, on, or adjacent the entire layer(s) or disposed on, disposed between, on, or adjacent a part of the layer(s).

An article initially having a structure comprising two electroactive layers (e.g., as shown in FIG. 2) may eventually achieve a structure comprising a single electroactive layer (e.g., similar to that shown in FIG. 1). This change in structure may take place prior to cycling of a cell including said article. An article as described herein may have a structure comprising two electroactive layers and may be positioned in an electrochemical cell that has been cycled fewer than 10 times, fewer than 8 times, fewer than 6 times, fewer than 4 times, or fewer than 2 times. An article as described herein may transition from a structure in which a composite protective layer is positioned between two electroactive layers (e.g., a first electroactive layer and a second electroactive layer) to a structure in which the composite protective layer is not positioned between two electroactive layers by, for example, intercalation of the electroactive material of one of the electroactive layers (e.g., the second electroactive layer) into the composite protective layer (and/or any particles therein) and/or reaction of the electroactive material of one of the electroactive layers (e.g., the second electroactive layer) with the composite protective layer (and/or any particles therein). Stated differently, in an article that initially comprises a composite protective layer and at least two electroactive layers comprising lithium metal (e.g., at least a first electroactive layer and a second electroactive layer), the electroactive material of one the electroactive layers (e.g., the second electroactive layer) may intercalate (e.g., completely) into and/or react (e.g., completely) with the composite protective layer (and/or any particles therein) to form an article including one electroactive layer (e.g., the first electroactive layer) and one composite protective layer comprising lithium that originated from the other electroactive layer (e.g., lithium that originated from the second electroactive layer). It should be understood that the disappearance of one electroactive layer (e.g., the second electroactive layer) from an article does not necessarily imply that the other electroactive layer (e.g., the first electroactive layer) is not also serving as a source of lithium that may intercalate into and/or react with the composite protective layer (and/or any particles therein). In fact, as will be described further below, it may be possible for two electroactive layers surrounding a composite protective layer to each intercalate lithium into and/or react with the composite protective layer.

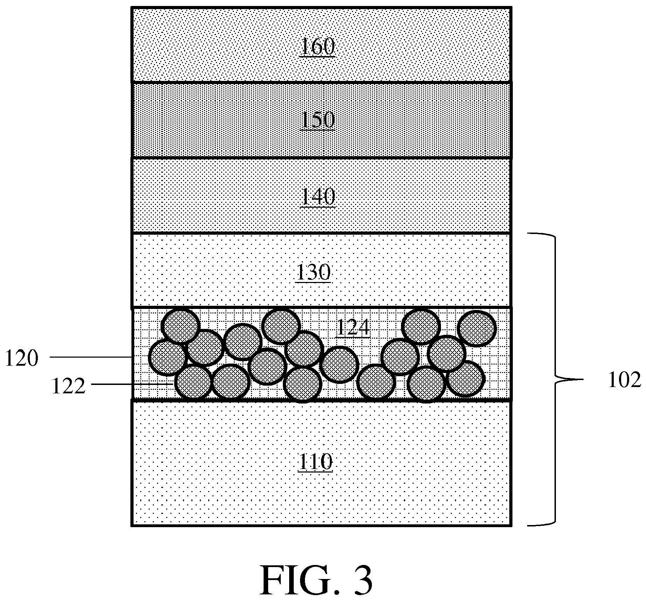

As described herein, one aspect relates to an electrochemical cell that comprises an article as described herein or elements of such an article. Such cell typically further comprises additional layers. FIG. 3 shows an electrochemical cell that comprises article 102 and layers 140, 150, and 160. Herein, layer 110 comprises lithium metal and functions as a first electrode, layer 140 is an electrolyte (e.g., a gel polymer electrolyte), layer 150 is a separator, and layer 160 is a second electrode. It should be appreciated that some, all, or none of these layers may be present, and if present may be arranged in any order with respect to each other.

It should also be understood that while article 102 is shown in FIG. 3 as including two electroactive layers, in other electrochemical cells an article as described herein may comprising a composite protective layer as described herein and only one electroactive layer. Similarly, it should be understood that an electrochemical cell comprising any article as described herein may further comprise one layer, two layers, three layers, four layers, five layers, or more layers. An electrode may be an outermost layer in the electrochemical cell, or may be positioned between two layers in the electrochemical cell. Non-limiting examples of additional layers include support layers, separators, electrodes, electrolytes, electroactive layers, and current collectors. One or more layers may be positioned between a first electrode (e.g., an electrode comprising a composite protective layer as described herein) and a second electrode (e.g., a counter electrode).

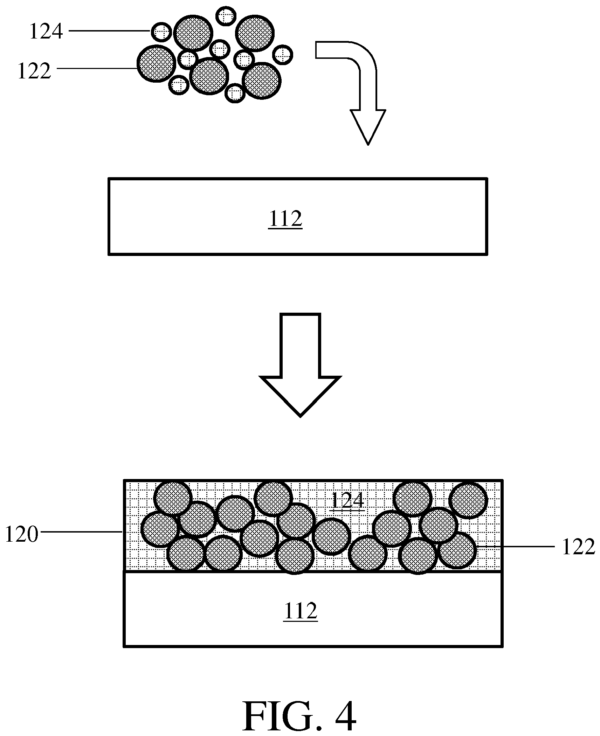

As described herein, one aspect relates to processes for forming articles comprising composite protective layers as described herein. FIG. 4 schematically shows an exemplary method for making a composite protective layer. In FIG. 4, particles 122 and polymeric binder 124 are deposited onto layer 112 to form composite protective layer 120. The polymeric binder may be deposited onto a layer while in the form particles (as is shown illustratively in FIG. 4) and/or in the form of droplets (e.g., liquid droplets). The polymeric binder may also be deposited from a liquid not in the form of droplets (e.g., as a uniform film, such as would be produced by Mayer rod coating and/or doctor blade coating). The particles and binder may be deposited by any suitable means. The particles and binder may be deposited from a slurry comprising said particles and said polymeric binder using one or more of air brushing, Mayer rod, doctor blading, aerosol deposition, spin coating, dip coating, inkjet printing, and silk screen printing techniques.

Layer 112 in FIG. 4 may be an electroactive layer comprising lithium metal. The composite protective layer may be deposited onto a first electroactive layer, and a second electroactive layer may be deposited onto the composite protective layer (e.g., on a side of the composite protective layer opposite the first electroactive layer). In other cases, layer 112 may be a polymer layer comprising one or more polymers selected from polymers which are swellable or soluble in an aprotic electrolyte (as defined above); or an electronically insulating porous layer (as defined above). For example, the composite protective layer may be deposited onto an electronically insulating porous layer, and then an electroactive material or layer may be deposited onto the composite protective layer.

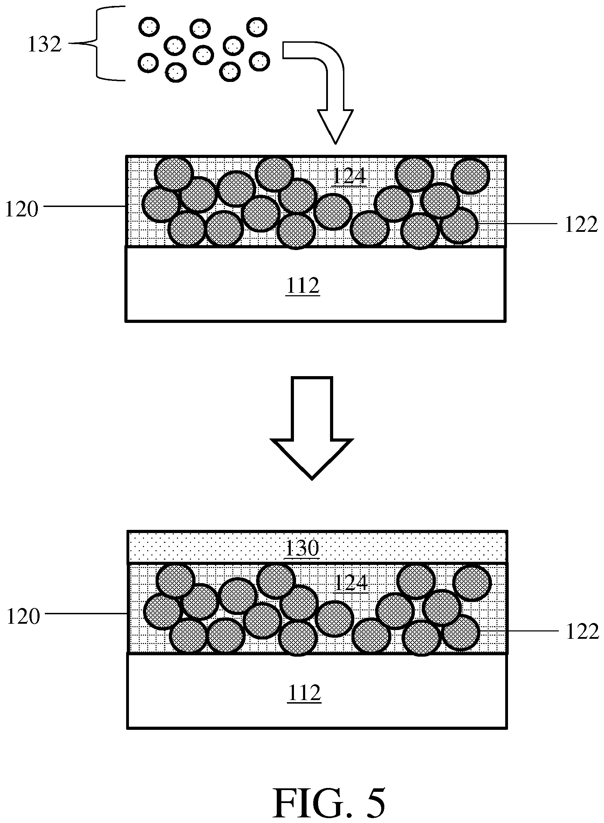

As also described above, an electroactive material or layer may be deposited onto a composite protective layer. FIG. 5 shows an example of this step, where electroactive material 132 is deposited onto composite protective layer 120 to form electroactive material 130. The electroactive material may be in the form of a vapor and vapor deposition techniques (e.g., vacuum vapor deposition techniques) may be employed to deposit the electroactive material or layer. For example, the electroactive material may be lithium metal and may be deposited from a vapor comprising lithium metal. A second electroactive layer may be added to an article as described herein by lamination. For example, a first electroactive layer disposed on a composite protective layer may be laminated to a second electroactive layer.

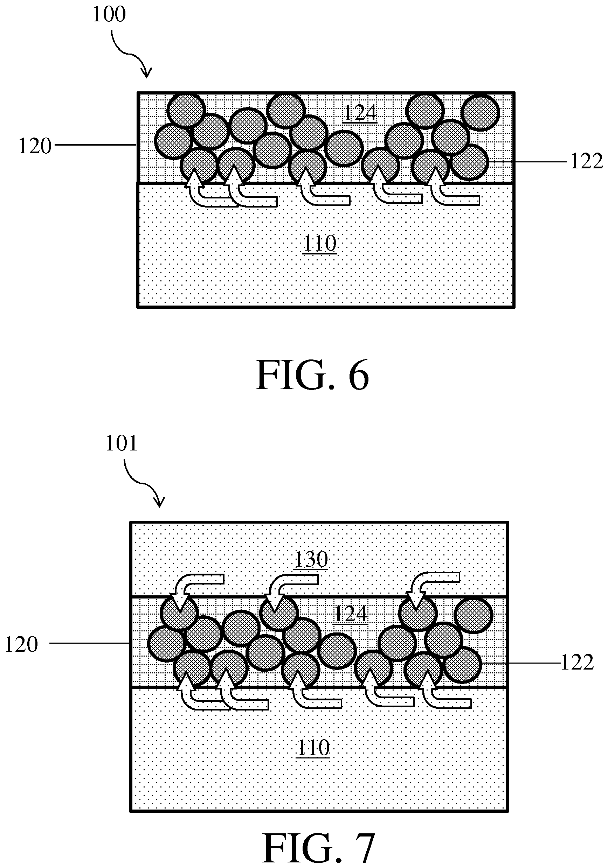

A method as described herein may comprise activating a composite protective layer and/or may comprise increasing the lithium ion conductivity of a composite protective layer. The composite protective layer may be activated by, for example, intercalating lithium ions into particles within the composite protective layer and/or reacting particles within the composite protective layer with the lithium metal in the electroactive material or layer. The lithium that intercalates as ions into the particles of the composite protective layer and/or reacts with the particles of the composite protective layer may originate from an electroactive material comprising lithium metal or layer comprising lithium metal (e.g., a first electroactive layer, a second electroactive layer), or it may originate from another source (e.g., an electrolyte in contact with the protective layer or permeating the composite protective layer, one or more particles comprising lithium ions embedded in the composite protective layer). FIG. 6 shows a method in which lithium from electroactive material 110 intercalates into and/or reacts with particles 122 in composite protective layer 120. Intercalation of lithium ions into and/or reaction of lithium with the composite protective layer and/or any particles therein may occur upon formation of the composite protective layer, upon deposition of an electroactive layer onto the composite protective layer, during cell assembly, and/or during cell cycling. Reaction of the lithium with the particles may comprise a redox reaction.

A composite protective layer may be activated by lithium that originates from two electroactive layers each comprising lithium metal. For example, a composite protective layer may be positioned between two electroactive layers comprising lithium metal, each of which may activate it. FIG. 7 shows an example of a method in which composite protective layer 120 reacts with and/or intercalates lithium from both first electroactive layer 110 and second electroactive layer 130.

A surface of an electroactive layer adjacent a composite protective layer may have undergone one or more chemical treatments prior to formation of the electroactive layer and/or prior to being positioned adjacent the electroactive layer. The chemical treatment(s) may reduce the rate at which the electroactive layer activates the composite protective layer in comparison to an electroactive layer that has not been treated. For example, a composite protective layer positioned between a first electroactive layer including a surface that has undergone a chemical treatment and a second electroactive layer that has not undergone a chemical treatment may be activated more rapidly by the second electroactive layer. Non-limiting examples of such chemical treatment include exposure of a surface of an electroactive layer to one or more gases, such as CO₂, NO, and oxygen plasma. Chemical treatment may comprise exposing the surface of an electroactive layer to a plasma comprising one or more such gases.

A composite protective layer may be activated by lithium that originates from one or more particles comprising lithium. The particles comprising lithium may be deposited onto and/or into the composite protective layer (e.g., by sputtering). The particles comprising lithium may be metallic and/or ceramic particles that comprise lithium ions (e.g., lithium oxide particles, lithium oxysulfide particles).

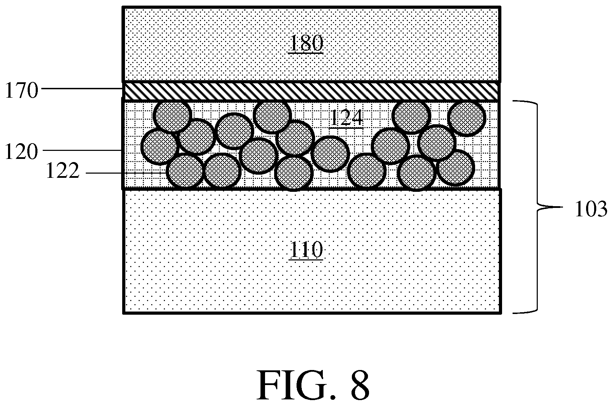

As described herein, one aspect relates to the formation of a stable solid electrolyte interface (SEI) between a composite protective layer and an electrolyte. FIG. 8 shows a stable SEI (layer) 170 positioned between article 103 and electrolyte 180. The SEI is an interface between a solid layer belonging to or adjacent to an electrode of an electrochemical cell and the electrolyte of said cell, and typically forms upon exposure of the electrode to the electrolyte. The SEI layer 170 may form between the composite protective layer 120 and the electrolyte 180, as shown illustratively in FIG. 8. In other cases the SEI layer may form at a different location, such as between the electroactive material (e.g. a layer comprising the electroactive material) and the composite protective layer. The SEI may include a portion of the composite protective layer. A protective composite layer as described herein may be exposed to an electrolyte for forming an SEI as described above.

A composite protective layer described herein may have any suitable properties.

A composite protective layer described herein may have a relatively high electronic conductivity. For example, the electronic conductivity of the composite protective layer may be greater than or equal to 10⁻⁶ S/cm, greater than or equal to 10⁻⁵ S/cm, greater than or equal to 10⁻⁴ S/cm, greater than or equal to 10⁻³ S/cm, greater than or equal to 10⁻² S/cm, greater than or equal to 10⁻¹ S/cm, greater than or equal to 10° S/cm, or greater than or equal to 10¹ S/cm. For example, the electronic conductivity of the composite protective layer may be less than or equal to 10² S/cm, less than or equal to 10¹ S/cm, less than or equal to 10° S/cm, less than or equal to 10⁻¹ S/cm, less than or equal to 10⁻² S/cm, less than or equal to 10⁻³ S/cm, less than or equal to 10⁻⁴ S/cm, or less than or equal to 10⁻⁵ S/cm. Combinations of the above-referenced ranges are also possible (e.g., greater than or equal to 10⁻⁶ S/cm and less than or equal to 10² S/cm). Other ranges are also possible. The electronic conductivity of the composite protective layer may be measured by EIS as described above.

A composite protective layer described herein typically has a relatively low area-specific impedance. For example, the composite protective layer may have an area-specific impedance of less than or equal to 10,000 Ohms*cm², less than or equal to 1,000 Ohms*cm², less than or equal to 100 Ohms*cm², or less than or equal to 10 Ohms*cm². For example, the composite protective layer may have an area-specific impedance of greater than or equal to 1 Ohms*cm², greater than or equal to 10 Ohms*cm², greater than or equal to 100 Ohms*cm², or greater than or equal to 1,000 Ohms*cm². Combinations of the above-referenced ranges are also possible (e.g., greater than or equal to 1 Ohms*cm² and less than or equal to 10,000 Ohms*cm²). Other ranges are also possible. The area-specific impedance of the composite protective layer may be determined by EIS as described above.

A composite protective layer described herein may have any suitable thickness. For example, the thickness of the composite protective layer may be greater than or equal to 2 µm, greater than or equal to 5 µm, greater than or equal to 10 µm, greater than or equal to 20 µm, greater than or equal to 50 µm, greater than or equal to 100 µm, or greater than or equal to 200 µm. For example, the thickness of the composite protective layer may be less than or equal to 500 µm, less than or equal to 200 µm, less than or equal to 100 µm, less than or equal to 50 µm, less than or equal to 20 µm, less than or equal to 10 µm, or less than or equal to 5 µm. Combinations of the above-referenced ranges are also possible (e.g., greater than or equal to 2 µm and less than or equal to 500 µm). Other ranges are also possible. The thickness of the composite protective layer may be determined by using scanning electron microscopy.

A composite protective layer described herein may be porous. For example, pores may make up greater than or equal to 2 vol% of the composite protective layer, greater than or equal to 5 vol% of the composite protective layer, greater than or equal to 10 vol% of the composite protective layer, greater than or equal to 20 vol% of the composite protective layer, greater than or equal to 30 vol% of the composite protective layer, greater than or equal to 40 vol% of the composite protective layer, greater than or equal to 50 vol% of the composite protective layer, greater than or equal to 60 vol% of the composite protective layer, greater than or equal to 70 vol%, of the composite protective layer or greater than or equal to 80 vol% of the composite protective layer. For example, pores make up less than or equal to 90 vol% of the composite protective layer, less than or equal to 80 vol% of the composite protective layer, less than or equal to 70 vol% of the composite protective layer, less than or equal to 60 vol% of the composite protective layer, less than or equal to 50 vol% of the composite protective layer, less than or equal to 40 vol% of the composite protective layer, less than or equal to 30 vol% of the composite protective layer, or less than or equal to 20 vol% of the composite protective layer. Combinations of the above-referenced ranges are also possible (e.g., greater than or equal to 10 vol% and less than or equal to 90 vol%).

The porosity of the composite protective layer may be determined by measuring the volume enclosed by the outer boundary of the composite protective layer (e.g., by use of a ruler), measuring the pore volume of the composite protective layer by employing ASTM standard D4284-07 as described below, dividing the measured pore volume by the volume enclosed by the composite protective layer, and multiplying by 100%. ASTM standard D4284-07, incorporated herein by reference in its entirety, can be used to produce a distribution of pore sizes plotted as the cumulative intruded pore volume as a function of pore diameter. To calculate the porosity, one would calculate the area under the curve that spans the given range over the x-axis. Optionally, in cases where the article includes pore sizes that lie outside the range of pore sizes that can be accurately measured using ASTM standard D4284-07, porosimetry measurements may be supplemented using BET surface analysis, as described, for example, in S. Brunauer, P. H. Emmett, and E. Teller, J. Am. Chem. Soc., 1938, 60, 309, which is incorporated herein by reference in its entirety.

For example, a composite protective layer as described herein comprises pores and at least 50% of the pore volume, at least 60% of the pore volume, at least 70% of the pore volume, at least 80% of the pore volume, or at least 90% of the pore volume is made up of pores with a cross-sectional diameter of greater than or equal to 0.001 µm, greater than or equal to 0.002 µm, greater than or equal to 0.005 µm, greater than or equal to 0.01 µm, greater than or equal to 0.02 µm, greater than or equal to 0.05 µm, greater than or equal to 0.1 µm, or greater than or equal to 0.2 µm. In some cases, at least 50% of the pore volume, at least 75% of the pore volume, or at least 90% of the pore volume is made up of pores with a cross-sectional diameter of less than or equal to 0.5 µm, less than or equal to 0.2 µm, less than or equal to 0.1 µm, less than or equal to 0.05 µm, less than or equal to 0.02 µm, less than or equal to 0.01 µm, less than or equal to 0.005 µm, or less than or equal to 0.002 µm. Combinations of the above-referenced ranges are also possible (e.g., greater than or equal to 0.001 µm and less than or equal to 0.5 µm). Other ranges are also possible. As used herein, the "cross-sectional diameter" of a pore refers to a cross-sectional diameter as measured using ASTM Standard Test D4284-07. One of ordinary skill in the art would be capable of calculating the distribution of cross-sectional diameters and the average cross-sectional diameter of the pores within a layer using mercury intrusion porosimetry as described in ASTM standard D4284-07. To calculate the percentage of the total pore volume within the sample that is occupied by pores within a given range of pore diameters, one would: (1) calculate the area under the curve that spans the given range over the x-axis, (2) divide the area calculated in step (1) by the total area under the curve, and (3) multiply by 100%.

A composite protective layer described herein comprises particles, comprising or consisting of any of the above-mentioned materials.

A composite protective layer may comprise graphite. As used herein, graphite includes stacked graphene planes. Graphite may be characterized by two dimensions: a thickness perpendicular to the graphene planes and a lateral particle size perpendicular to the thickness. The lateral particle size is determined by calculating the projected area of the graphite particles perpendicular to its thickness and then finding the diameter of a circle enclosing the same area. For example, the graphite particles may have a lateral particle size of less than or equal to 500 nm, less than or equal to 300 nm, less than or equal to 200 nm, less than or equal to 100 nm, less than or equal to 50 nm, or less than or equal to 20 nm. For example, the graphite particles may have a lateral particle size of greater than or equal to 10 nm, greater than or equal to 20 nm, greater than or equal to 50 nm, greater than or equal to 100 nm, greater than or equal to 200 nm, or greater than or equal to 300 nm. Combinations of the above-referenced ranges are also possible (e.g., greater than or equal to 10 nm and less than or equal to 500 nm, or greater than or equal to 10 nm and less than or equal to 500 nm). Other ranges are also possible. A composite protective layer as described herein may comprise two populations of graphite particles, each with a different lateral particle size (e.g., a population of graphite particles with a lateral particle size of less than or equal to 10 nm and a population of graphite particles with a lateral particle size of greater than 10 nm and less than or equal to 500 nm).

For example, a composite protective layer as described herein may comprise graphite particles with an average thickness of less than or equal to 500 nm, less than or equal to 200 nm, less than or equal to 100 nm, less than or equal to 50 nm, less than or equal to 40 nm, less than or equal to 30 nm, less than or equal to 20 nm, less than or equal to 10 nm, or less than or equal to 5 nm. For example, the graphite particles have a thickness of greater than or equal to 2 nm, greater than or equal to 5 nm, greater than or equal to 10 nm, greater than or equal to 20 nm, greater than or equal to 30 nm, greater than or equal to 40 nm, greater than or equal to 50 nm, greater than or equal to 100 nm, or greater than or equal to 200 nm. Combinations of the above-referenced ranges are also possible (e.g., greater than or equal to 2 nm and less than or equal to 500 nm). Other ranges are also possible.

A composite protective layer may comprise a relatively low amount of particles in comparison to the amount of electroactive material, and/or the particles may be overlithiated (i.e. supersaturated with lithium). It is unexpected that small amounts of particles would improve electrochemical cell properties, as traditionally it is believed that an excess of lithium can result in lithium plating on the particles. For example, the ratio of the weight of the particles in the composite protective layer to the weight of the electroactive material in the composite protective layer may be less than or equal to 49, less than or equal to 19, less than or equal to 15, less than or equal to 12.5, less than or equal to 10, less than or equal to 9, less than or equal to 7.5, less than or equal to 5, less than or equal to 2.5, less than or equal to 1, less than or equal to 0.75, less than or equal to 0.5, less than or equal to 0.42, less than or equal to 0.25, less than or equal to 0.1, or less than or equal to 0.05. For example, the ratio of the weight of the particles in the composite protective layer to the weight of the electroactive material in the composite protective layer may be greater than or equal to 0.02, greater than or equal to 0.05, greater than or equal to 0.1, greater than or equal to 0.25, greater than or equal to 0.42, greater than or equal to 0.5, greater than or equal to 0.75, greater than or equal to 1, greater than or equal to 2.5, greater than or equal to 5, greater than or equal to 7.5, greater than or equal to 9, greater than or equal to 10, greater than or equal to 12.5, greater than or equal to 15, or greater than or equal to 19. Combinations of the above-referenced ranges are also possible (e.g., greater than or equal to 0.02 and less than or equal to 49, greater than or equal to 0.1 and less than or equal to 19, or greater than or equal to 0.42 and less than or equal to 9). Other ranges are also possible. These ratios may be determined by weighing non-electroactive material components of the composite protective layer, including the particles that will be positioned the composite protective layer, before forming the composite protective layer; forming the composite protective layer; and then weighing the composite protective layer. The weight of the electroactive material could be determined by subtracting out the measured weights of the other composite protective layer components. Then, the ratio of the particles to the electroactive material in the composite protective layer could be determined by dividing the measured weight of the particles by the calculated weight of the electroactive material.

For example, the ratio of the weight of graphite particles in the composite protective layer to the weight of lithium may be less than or equal to 49, less than or equal to 19, less than or equal to 15, less than or equal to 12.5, less than or equal to 10, less than or equal to 9, less than or equal to 7.5, less than or equal to 5, less than or equal to 2.5, less than or equal to 1, less than or equal to 0.75, less than or equal to 0.5, less than or equal to 0.42, less than or equal to 0.25, less than or equal to 0.1, or less than or equal to 0.05. For example, the ratio of the weight of graphite particles in the composite protective layer to the weight lithium may be greater than or equal to 0.02, greater than or equal to 0.05, 0.1, greater than or equal to 0.25, greater than or equal to 0.42, greater than or equal to 0.5, greater than or equal to 0.75, greater than or equal to 1, greater than or equal to 2.5, greater than or equal to 5, greater than or equal to 7.5, greater than or equal to 9, greater than or equal to 10, greater than or equal to 12.5, greater than or equal to 15, or greater than or equal to 19. Combinations of the above-referenced ranges are also possible (e.g., greater than or equal to 0.02 and less than or equal to 49, greater than or equal to 0.1 and less than or equal to 19, or greater than or equal to 0.42 and less than or equal to 9). Other ranges are also possible. This ratio could be determined by weighing non-electroactive material components including the graphite particles, before forming the composite protective layer; forming the article; and then weighing the article. The weight of the electroactive material could be determined by subtracting out the measured weights of the non-electroactive components. Then, the ratio of the graphite particles to the electroactive material in the article could be determined by dividing the measured weight of the graphite particles by the calculated weight of the electroactive material.

Particles in a composite protective layer as described herein may have any suitable average diameter. For example, the particles in the composite protective layer may have an average diameter of greater than or equal to 10 nanometers, greater than or equal to 15 nanometers, greater than or equal to 20 nanometers, greater than or equal to 50 nanometers, greater than or equal to 100 nanometers, greater than or equal to 200 nanometers, greater than or equal to 500 nanometers, greater than or equal to 1 µm, greater than or equal to 2 µm, or greater than or equal to 5 µm. For example, the particles in the composite protective layer may have an average diameter of less than or equal to 10 µm, less than or equal to 5 µm, less than or equal to 2 µm, less than or equal to 1 µm, less than or equal to 500 nanometers, less than or equal to 200 nanometers, less than or equal to 100 nanometers, less than or equal to 50 nanometers, less than or equal to 20 nanometers, or less than or equal to 15 nanometers. Combinations of the above-referenced ranges are also possible (e.g., greater than or equal to 10 nanometers and less than or equal to 10 µm). Other ranges are also possible. The average diameter of particles in a composite protective layer may be determined by imaging the particles with a scanning electron microscope (SEM). An image may be acquired at a magnification between about 10X to about 100,000X, depending on the overall dimensions of the plurality of particles. Those skilled in the art would be capable of selecting an appropriate magnification for imaging the sample. The diameter of an individual particle can be determined by calculating the volume of each particle, calculating the radius of a sphere that would enclose an equivalent volume, and calculating the radius of that sphere. The average diameter of the particles may be determined by taking the average of the individual particle diameters.

The particles in a composite protective layer as described herein may have any suitable lithium ion conductivity. As described above, particles that comprise lithium may have a higher lithium ion conductivity than particles that do not comprise lithium or particles that comprise lithium to a lesser extent.

In some cases the particles in the composite protective layer include lithium in a relatively low amount (e.g., prior to activation) and the lithium ion conductivity of the particles in the composite protective layer may be less than or equal to 10⁻⁷ S/cm, less than or equal to 10⁻⁸ S/cm, or less than or equal to 10⁻⁹ S/cm. For example the lithium ion conductivity of the particles in the composite protective layer may be greater than or equal to 10⁻¹⁰ S/cm, greater than or equal to 10⁻⁹ S/cm, or greater than or equal to 10⁻⁸ S/cm. Combinations of the above-referenced ranges are also possible (e.g., greater than or equal to 10⁻¹⁰ S/cm and less than or equal to 10⁻⁷ S/cm). Other ranges are also possible. A composite protective layer as described herein may comprise particles which, prior to the particles' incorporation into the composite protective layer (and prior to activation with lithium) have a lithium ion conductivity in one or more of the above-referenced ranges. The lithium ion conductivity of the particles can be determined before the particles are incorporated into the composite protective layer, e.g., by pressing the particles between two copper cylinders at a pressure of up to 3 tons/cm² and then employing EIS as described above.

In other cases the particles in the composite protective layer include lithium in at least a moderate amount and the lithium ion conductivity of the particles in the composite protective layer may be greater than or equal to 10⁻⁵ S/cm, greater than or equal to 10⁻⁴ S/cm, greater than or equal to 10⁻³ S/cm, greater than or equal to 10⁻² S/cm, or greater than or equal to 10⁻¹ S/cm. For example, the lithium ion conductivity of the particles in the composite protective layer may be less than or equal to 10⁰ S/cm, less than or equal to 10⁻¹ S/cm, less than or equal to 10⁻² S/cm, less than or equal to 10⁻³ S/cm, or less than or equal to 10⁻⁴ S/cm. Combinations of the above-referenced ranges are also possible (e.g., greater than or equal to 10⁻⁵ S/cm and less than or equal to 10⁰ S/cm). Other ranges are also possible. A composite protective layer as described herein may comprise particles which, prior to the particles' incorporation into the composite protective layer (and prior to activation with lithium) have a lithium ion conductivity in one or more of the above-reference ranges. The lithium ion conductivity of the particles can be determined before the particles are incorporated into the composite protective layer, e.g., by pressing the particles between two copper cylinders at a pressure of up to 3 tons/cm² and then employing EIS as described above.

The particles in a composite protective layer as described herein may have a relatively high electronic conductivity. For example, the electronic conductivity of the particles in the protective layer may be greater than or equal to 10⁻⁶ S/cm, greater than or equal to 10⁻⁵ S/cm, greater than or equal to 10⁻⁴ S/cm, greater than or equal to 10⁻³ S/cm, greater than or equal to 10⁻² S/cm, greater than or equal to 10⁻¹ S/cm, greater than or equal to 10⁰ S/cm, or greater than or equal to 10¹ S/cm. For example, the electronic conductivity of the particles in the composite protective layer may be less than or equal to 10² S/cm, less than or equal to 10¹ S/cm, less than or equal to 10⁰ S/cm, less than or equal to 10⁻¹ S/cm, less than or equal to 10⁻² S/cm, less than or equal to 10⁻³ S/cm, less than or equal to 10⁻⁴ S/cm, or less than or equal to 10⁻⁵ S/cm. Combinations of the above-referenced ranges are also possible (e.g., greater than or equal to 10⁻⁶ S/cm and less than or equal to 10² S/cm). Other ranges are also possible. A composite protective layer as described herein may comprise particles which, prior to the particles' assembly into the composite protective layer (and prior to activation with lithium), have an electronic conductivity in one or more of the above-reference ranges. The electronic conductivity of the particles in the protective layer may be determined before the particles are incorporated into the composite protective layer, e.g., by pressing the particles between two copper cylinders at a pressure of up to 3 tons/cm² and then employing EIS as described above.

The particles described herein (e.g., particles that can be activated) may make up any suitable wt% of the composite protective layer. For example, the particles may make up greater than or equal to 50 wt% of the composite protective layer, greater than or equal to 55 wt% of the composite protective layer, greater than or equal to 60 wt% of the composite protective layer, greater than or equal to 65 wt% of the composite protective layer, greater than or equal to 70 wt% of the composite protective layer, greater than or equal to 75 wt% of the composite protective layer, greater than or equal to 80 wt% of the composite protective layer, greater than or equal to 85 wt% of the composite protective layer, greater than or equal to 90 wt% of the composite protective layer, greater than or equal to 95 wt% of the composite protective layer, or greater than or equal to 97 wt% of the composite protective layer. For example, the particles may make up less than or equal to 99 wt% of the composite protective layer, less than or equal to 97 wt% of the composite protective layer, less than or equal to 95 wt% of the composite protective layer, less than or equal to 90 wt% of the composite protective layer, less than or equal to 85 wt% of the composite protective layer, less than or equal to 80 wt% of the composite protective layer, less than or equal to 75 wt% of the composite protective layer, less than or equal to 70 wt% of the composite protective layer, less than or equal to 65 wt% of the composite protective layer, less than or equal to 60 wt% of the composite protective layer, or less than or equal to 55 wt% of the composite protective layer. Combinations of the above-referenced ranges are also possible (e.g., greater than or equal to 50 wt% of the composite protective layer and less than or equal to 99 wt% of the composite protective layer, or greater than or equal to 70 wt% of the composite protective layer and less than or equal to 95 wt%). Other ranges are also possible.

As described above, a composite protective layer comprises a polymeric binder. The polymeric binder may aid in binding the particles together and/or binding the composite protective layer to the underlying layer on which the composite protective layer is positioned. The particles may be dispersed in the polymeric binder, or the binder may serve as a matrix in which one or more particles are disposed. At least a portion of the particles present in the composite protective layer may be encapsulated by the polymeric binder. As an example, greater than or equal to 50%, greater than or equal to 75%, greater than or equal to 90%, greater than or equal to 95%, or greater than or equal to 99% of the surface area of at least a portion of the particles may be in direct contact with the polymeric binder. The polymeric binder may be distributed fairly evenly throughout the layer. For instance, the density of the polymeric binder in the layer may vary by less than or equal to 30%, less than or equal to 20%, less than or equal to 10%, less than or equal to 5%, less than or equal to 2%, or less than or equal to 1 % across the volume of the layer.

A polymeric binder may have one or more beneficial properties, such as increasing the protective properties of a composite protective layer of which it is a part. For example, the polymeric binder may be relatively insoluble in common electrolytes, and/or may swell to a relatively low degree in common electrolytes such as aprotic electrolytes. The extent of the solubility and/or swelling of the polymeric binder in an electrolyte may be determined by weighing the polymeric binder, exposing the polymeric binder to the electrolyte for 24 hours, air drying the polymeric binder at room temperature under a fume hood in a dry room, evaluating whether or not the polymeric binder breaks apart, and then weighing the polymeric binder again. If the polymeric binder breaks apart, it cannot be weighed accurately and is considered to swell to at least a moderate degree in the electrolyte and/or is considered at least partially soluble or soluble in the electrolyte. If the polymeric binder increases in weight by less than 20%, it is considered to swell to a relatively low degree in the electrolyte. If the polymeric binder increases in weight by less than 2%, it is considered to be relatively insoluble in the electrolyte. For example, the polymeric binder increases in weight by less than or equal to 25%, less than or equal to 20 %, less than or equal to 15%, less than or equal to 10%, less than or equal to 5%, less than or equal to 2%, or less than or equal to 1%. For example, the polymeric binder increases in weight by greater than or equal to 0%, greater than or equal to 1%, greater than or equal to 2%, greater than or equal to 5%, greater than or equal to 10%, greater than or equal to 15%, or greater than or equal to 20%. Combinations of the above-referenced ranges are also possible (e.g., greater than or equal to 0% and less than or equal to 25%, greater than or equal to 0% and less than or equal to 20%, or greater than or equal to 0% and less than or equal to 10%). Other ranges are also possible.

The polymeric binder may have any suitable composition. The polymeric binder may comprise one or more of an elastomer, a thermoset, or a thermoplastic. For instance the polymeric binder is a polyol (e.g., poly(vinyl alcohol)), a fluorinated polymer (e.g., poly(vinylidene fluoride)), a latex rubber, an EPDM rubber, an acrylic, a silane, a siloxane (e.g., PDMS), a polydiene, an epoxy, a polyurethane, a polyacrylamide, a thiol-ene polymer, poly(vinyl pyrrolidone), poly(isopropylene), poly(ethylene imine), poly(acrylonitride), poly(ethylene oxide), a block copolymer, a styrene-butadiene rubber, Kraton 1924FG, or any combination thereof.

The polymeric binder may make up any suitable wt% of the composite protective layer. For example, the polymeric binder makes up greater than or equal to 1 wt% of the composite protective layer, greater than or equal to 2 wt% of the composite protective layer, greater than or equal to 5 wt% of the composite protective layer, greater than or equal to 10 wt% of the composite protective layer, greater than or equal to 15 wt% of the composite protective layer, greater than or equal to 20 wt% of the composite protective layer, greater than or equal to 25 wt% of the composite protective layer, greater than or equal to 30 wt% of the composite protective layer, greater than or equal to 35 wt% of the composite protective layer, greater than or equal to 40 wt% of the composite protective layer, or greater than or equal to 45 wt% of the composite protective layer. For example, the polymeric binder makes up less than or equal to 50 wt% of the composite protective layer, less than or equal to 45 wt% of the composite protective layer, less than or equal to 40 wt% of the composite protective layer, less than or equal to 35 wt% of the composite protective layer, less than or equal to 30 wt% of the composite protective layer, less than or equal to 25 wt% of the composite protective layer, less than or equal to 20 wt% of the composite protective layer, less than or equal to 15 wt% of the composite protective layer, less than or equal to 10 wt% of the composite protective layer, less than or equal to 5 wt% of the composite protective layer, or less than or equal to 2 wt% of the composite protective layer. Combinations of the above-referenced ranges are also possible (e.g., greater than or equal to 1 wt% of the composite protective layer and less than or equal to 50 wt% of the composite protective layer, or greater than or equal to 5 wt% and less than or equal to 30 wt% of the composite protective layer). Other ranges are also possible.

A composite protective layer may comprise a polymeric binder with a relatively low lithium ion conductivity. The lithium ion conductivity of the polymeric binder may be less than or equal to 1 * 10⁻⁶ S/cm, 5 * 10⁻⁷ S/cm, 1 * 10⁻⁷ S/cm, or 5 * 10⁻⁸ S/cm. The lithium ion conductivity of the polymeric binder may be greater than or equal to 1 * 10⁻⁸ S/cm, 5 * 10⁻⁸ S/cm, 1 * 10⁻⁷ S/cm, or 5 * 10⁻⁷ S/cm. Combinations of the above-referenced ranges are also possible (e.g., less than or equal to 10⁻⁶ S/cm and greater than 10⁻⁸ S/cm). Other ranges are also possible. The lithium ion conductivity of the polymeric binder may be determined by EIS as described above.

A composite protective layer may comprise a polymeric binder with a relatively low electronic conductivity. The electronic conductivity of the polymeric binder may be less than or equal to 1 * 10⁻⁶ S/cm, 5 * 10⁻⁷ S/cm, 1 * 10⁻⁷ S/cm, or 5 * 10⁻⁸ S/cm. The electronic conductivity of the polymeric binder may be greater than or equal to 1 * 10⁻⁸ S/cm, 5 * 10⁻⁸ S/cm, 1 * 10⁻⁷ S/cm, or 5 * 10⁻⁷ S/cm. Combinations of the above-referenced ranges are also possible (e.g., less than or equal to 10⁻⁶ S/cm and greater than 10⁻⁸ S/cm). Other ranges are also possible. The electronic conductivity of the polymeric binder may be determined by EIS as described above.

A composite protective layer may further comprise one or more additives. Non-limiting examples of suitable additives may include thickening agents, plasticizers, thixotropic agents, wetting agents, demulsifiers, catalysts, monomers, initiators, silica, boehmite, and alumina.

The additives can be present in any suitable amount. For example, the additive(s) may make up greater than or equal to 0.5 wt% of a composite protective layer, greater than or equal to 1 wt% of the composite protective layer, greater than or equal to 2 wt% of the composite protective layer, greater than or equal to 5 wt% of the composite protective layer, or greater than or equal to 10 wt% of the composite protective layer. For example the additive(s) make up less than or equal to 20 wt% of the composite protective layer, less than or equal to 10 wt% of the composite protective layer, less than or equal to 5 wt% of the composite protective layer, less than or equal to 2 wt% of the composite protective layer, or less than or equal to 1 wt% of the composite protective layer. Combinations of the above-referenced ranges are also possible (e.g., greater than or equal to 2 wt% and less than or equal to 5 wt% of the composite protective layer, or greater than or equal to 5 wt% and less than or equal to 10 wt% of the composite protective layer). Other ranges are also possible.

Articles and cells as described herein comprise an electroactive material comprising lithium metal and/or an electroactive material layer comprising lithium metal. Suitable electroactive materials and/or electroactive materials present in an electroactive layer (e.g., a first electroactive layer, a second electroactive layer) include, but are not limited to, lithium metal such as lithium foil and lithium deposited onto a substrate, and lithium alloys (e.g., lithium-aluminum alloys and lithium-tin alloys). Suitable lithium alloys include alloys of lithium and aluminum, magnesium, silicium (silicon), indium, silver, and/or tin. The electroactive layer may comprise one or more binder materials (e.g., polymers, etc.). In an electrochemical cell, the electroactive materials described above may be suitable for use as an anode active electrode species.

The electroactive layer comprising lithium metal may have any suitable thickness. For instance, the electroactive layer comprising lithium metal may have a thickness of less than or equal to 200 µm, less than or equal to 100 µm, less than or equal to 50 µm, less than or equal to 25 µm, less than or equal to 10 µm, or less than or equal to 5 µm. For instance, the electroactive comprising lithium metal layer may have a thickness of greater than or equal to 1 µm, greater than or equal to 5 µm, greater than or equal to 10 µm, greater than or equal to 25 µm, greater than or equal to 50 µm, greater than or equal to 100 µm, or greater than or equal to 150 µm. Combinations of the above-referenced ranges are also possible (e.g., greater than or equal to 1 µm and less than or equal to 200 µm, greater than or equal to 1 µm and less than or equal to 100 µm, greater than or equal to 5 µm and less than or equal to 50 µm, greater than or equal to 5 µm and less than or equal to 25 µm, greater than or equal to 10 µm and less than or equal to 25 µm). Other ranges are also possible. The choice of the thickness may depend on cell design parameters such as the excess amount of lithium desired, cycle life, and the thickness of other layers of the electrochemical cell in which the electroactive layer is positioned.

When a first and a second electroactive layer comprising lithium metal are present, said second electroactive layer may have a thickness that is less than the thickness of the first electroactive layer. For instance, the thickness of the second electroactive layer comprising lithium metal may be less than or equal to 50% of the thickness of the first electroactive layer comprising lithium metal, less than or equal to 40% of the thickness of the first electroactive layer, less than or equal to 33% of the thickness of the first electroactive layer, less than or equal to 10% of the thickness of the first electroactive layer, less than or equal to 5% of the thickness of the first electroactive layer, less than or equal to 2% of the thickness of the first electroactive layer, or less than or equal to 1% of the thickness of the first electroactive layer. For instance, the thickness of the second electroactive layer may be greater than or equal to 0.5% of the thickness of the first electroactive layer, greater than or equal to 1% of the thickness of the first electroactive layer, greater than or equal to 2% of the thickness of the first electroactive layer, greater than or equal to 5% of the thickness of the first electroactive layer, greater than or equal to 10% of the thickness of the first electroactive layer, greater than or equal to 33% of the thickness of the first electroactive layer, or greater than or equal to 40% of the thickness of the first electroactive layer. Combinations of the above-referenced ranges are also possible (e.g., greater than or equal to 1% of the thickness of the first electroactive layer and less than or equal to 50% of the thickness of the first electroactive layer, greater than or equal to 1% of the thickness of the first electroactive layer and less than or equal to 33% of the thickness of the first electroactive layer, or greater than or equal to 1% of the thickness of the first electroactive layer and less than or equal to 10% of the thickness of the first electroactive layer). Other ranges are also possible.

The thickness of the second electroactive layer may be less than or equal to 20 µm, less than or equal to 10 µm, less than or equal to 5 µm, less than or equal to 2 µm, less than or equal to 1 µm, less than or equal to 500 nanometers, less than or equal to 200 nanometers, or less than or equal to 100 nanometers. The thickness of the second electroactive layer may be greater than or equal to 50 nanometers, greater than or equal to 100 nanometers, greater than or equal to 200 nanometers, greater than or equal to 500 nanometers, greater than or equal to 1 µm, greater than or equal to 2 µm, greater than or equal to 5 µm, or greater than or equal to 10 µm. Combinations of the above-referenced ranges are also possible (e.g., greater than or equal to 50 nanometers and less than or equal to 20 µm). Other ranges are also possible.

As described above, a composite protective layer may be disposed on or deposited onto another layer. Said other layer may be a layer that supports the composite protective layer, and/or may be a layer onto which it is beneficial to deposit the composite protective layer. Said layer which the composite protective layer may be disposed or deposited onto may be an electroactive layer comprising lithium metal, a polymer layer comprising one or more polymers selected from polymers which are swellable or soluble in an aprotic electrolyte (as defined above); or an electronically insulating porous layer (as defined above). Said layer which the composite protective layer may be disposed or deposited onto may in turn be disposed on a removable carrier that is not designed to be incorporated into a final electrochemical cell and may be capable of being released from the layer structure that is designed to be incorporated into a final electrochemical cell. When said layer structure designed to be incorporated into a final electrochemical cell is adjacent a removable carrier, the removable carrier may be partially or entirely delaminated from the layer structure in electrochemical cell formation.

In some cases it may be challenging to deposit a composite protective layer on a layer which is designed to be incorporated into an electrochemical cell. For example, it may be challenging to deposit a composite protective layer on a porous layer like a separator layer, because any material deposited onto a porous layer may seep into said pores and block them. Thus, an auxiliary layer adjacent a separator may be provided which serves to prevent deposition of one or more portions of a composite protective layer (e.g., particles, polymeric binder) into any pores present in the separator and/or to prevent contact between the separator and the composite protective layer. Such auxiliary layer is incorporated into a final electrochemical cell. Thus, the auxiliary layer is suitably formed of a material that is stable in the electrolyte and does not substantially interfere with the structural integrity of the adjacent layers. For example, the auxiliary layer may be formed of a polymer electrolyte or gel electrolyte (e.g., it may comprise lithium ions and/or be conductive to lithium ions) and/or a polymer that may swell in a liquid electrolyte to form a polymer gel electrolyte. An auxiliary layer as described herein may be formed of a polymer that is swellable in an aprotic electrolyte present in an electrochemical cell in which the article comprising the composite protective layer is positioned and/or may be dissolved upon exposure to such aprotic electrolyte. Auxiliary layers, release layers and removable carriers are herein commonly referred to as support layers.

An article as described herein may comprise a release layer, such as the release layers described in U.S. Pat. Pub. No. 2014/272,565, U.S. Pat. Pub. No. 2014/272,597, and U.S. Pat. Pub. No. 2011/068,001, each of which is herein incorporated by reference in their entirety.

A polymeric layer functioning as a removable carrier, auxiliary layer or release layer as described above may be formed of any suitable polymeric material. Specific examples of appropriate polymers include, but are not limited to, polyoxides, poly(alkyl oxides)/polyalkylene oxides (e.g., polyethylene oxide, polypropylene oxide, polybutylene oxide), polyvinyl alcohols, polyvinyl butyral, polyvinyl formal, vinyl acetate-vinyl alcohol copolymers, ethylene-vinyl alcohol copolymers, and vinyl alcohol-methyl methacrylate copolymers, polysiloxanes, and fluorinated polymers. The polymer may be in the form of, for example, a solid polymer (e.g., a solid polymer electrolyte), a glassy-state polymer, or a polymer gel. Additional examples of polymeric materials include polysulfones, polyethersulfone, polyphenylsulfones (e.g., Ultrason® S 6010, S 3010 and S 2010, available from BASF), polyethersulfone-polyalkyleneoxide copolymers, polyphenylsulfone-polyalkyleneoxide copolymers, polysulfone-polyalkylene oxide copolymers, polyisobutylene (e.g., Oppanol® B10, B15, B30, B80, B150 and B200, available from BASF), polyisobutylene succinic anhydride (PIBSA), polyisobutylene-polyalkyleneoxide copolymers, polyamide 6 (e.g., Ultramid® B33, available from BASF) (e.g., extrusion of 2 µm polyamide layer on polyolefin carrier or solution casting of PA layer on polyolefin carrier), polyvinylpyrrolidone, polyvinylpyrrolidone-polyvinylimidazole copolymers (e.g., Sokalan® HP56, available from BASF), polyvinylpyrrolidone-polyvinylactetate copolymers (e.g., Luviskol®, available from BASF), maleinimide-vinylether copolymers, polyacrylamides, fluorinated polyacrylates (optionally including surface reactive co-monomers), polyethylene-polyvinylalcohol copolymers (e.g., Kuraray®, available from BASF), polyethylene-polyvinylacetate copolymers, polyvinylalcohol and polyvinylacetate copolymers, polyoxymethylene (e.g., extruded), polyvinylbutyral (e.g., Kuraray®, available from BASF), polyureas (e.g., branched), polymers based on photodepolymerization of acrolein derivatives (CH₂=CR-C(O)R), polysulfone-polyalkyleneoxide copolymers, polyvinylidene difluoride (e.g., Kynar® D155, available from BASF), and combinations thereof.

For example, a support layer comprises a polyethersulfone-polyalkylene oxide copolymer. The polyethersulfone-polyalkylene oxide copolymer may be a polyarylethersulfone-polyalkylene oxide copolymer (PPC) obtained by polycondensation of reaction mixture (RG) comprising the components: (A1) at least one aromatic dihalogen compound, (B1) at least one aromatic dihydroxyl compound, and (B2) at least one polyalkylene oxide having at least two hydroxyl groups. The reaction mixture may also include (C) at least one aprotic polar solvent and (D) at least one metal carbonate, where the reaction mixture (RG) does not comprise any substance which forms an azeotrope with water. The resulting copolymer may be a random copolymer or a block copolymer. For instance, the resulting copolymer may include blocks of A1-B1, and blocks of A1-B2. The resulting copolymer may, in some instances, include blocks of A1-B1-A1-B2.

Further examples of polymeric materials include polyimide (e.g., Kapton®) with a hexafluoropropylene (HFP) coating (e.g., available from Dupont); siliconized polyester films (e.g., a Mitsubishi polyester), metallized polyester films (e.g., available from Mitsubishi or Sion Power), polybenzimidazoles (PBI; e.g., low molecular weight PBI -available from Celanese), polybenzoxazoles (e.g., available from Foster-Miller, Toyobo), ethylene-acrylic acid copolymers (e.g., Poligen®, available from BASF), acrylate based polymers (e.g., Acronal®, available from BASF), (charged) polyvinylpyrrolidone-polyvinylimidazole copolymers (e.g., Sokalane® HP56, Luviquat®, available from BASF), polyacrylonitriles (PAN), styrene-acrylonitriles (SAN), thermoplastic polyurethanes (e.g., Elastollan® 1195 A 10, available from BASF), polysulfone-poly(akylene oxide) copolymers, benzophenone-modified polysulfone (PSU) polymers, polyvinylpyrrolidone-polyvinylactetate copolymers (e.g., Luviskol®, available from BASF), and combinations thereof.

The polymer may be conductive to certain ions (e.g., alkali metal ions) but is also substantially electrically conductive. Examples of such materials include electrically conductive polymers (also known as electronic polymers or conductive polymers) that are doped with lithium salts (e.g., LiSCN, LiBr, Lil, LiClO₄, LiAsF₆, LiSO₃CF₃, LiSO₃CH₃, LiBF₄, LiB(Ph)₄, LiPF₆, LiC(SO₂CF₃)₃, and LiN(SO₂CF₃)₂). Conductive polymers are known in the art; examples of such polymers include, poly(acetylene)s, poly(pyrrole)s, poly(thiophene)s, poly(aniline)s, poly(fluorene)s, polynaphthalenes, poly(p-phenylene sulfide), and poly(para-phenylene vinylene)s. Electrically-conductive additives may also be added to polymers to form electrically-conductive polymers.

A support layer may include a polymer that is conductive to one or more types of ions. The removable carrier, auxiliary layer or release layer may be substantially non-electrically conductive. Examples of ion-conductive species (that may be substantially non-electrically conductive) include non-electrically conductive materials (e.g., electrically insulating materials) that are doped with lithium salts. For example, acrylate, polyethyleneoxide, silicones, polyvinylchlorides, and other insulating polymers that are doped with lithium salts are ion-conductive (but substantially non-electrically conductive). Additional examples of polymers include ionically conductive polymers, sulfonated polymers, and hydrocarbon polymers. Suitable ionically conductive polymers may include, e.g., ionically conductive polymers known to be useful in solid polymer electrolytes and gel polymer electrolytes for lithium electrochemical cells, such as, for example, polyethylene oxides. Suitable sulfonated polymers may include, e.g., sulfonated siloxane polymers, sulfonated polystyrene-ethylenebutylene polymers, and sulfonated polystyrene polymers. Suitable hydrocarbon polymers may include, e.g., ethylene-propylene polymers, polystyrene polymers, and the like.

A support layer may include a crosslinkable polymer. Non-limiting examples of crosslinkable polymers include: polyvinyl alcohol, polyvinylbutyral, polyvinylpyridyl, polyvinyl pyrrolidone, polyvinyl acetate, acrylonitrile butadiene styrene (ABS), ethylene-propylene rubbers (EPDM), EPR, chlorinated polyethylene (CPE), ethylenebisacrylamide (EBA), acrylates (e.g., alkyl acrylates, glycol acrylates, polyglycol acrylates, ethylene ethyl acrylate (EEA)), hydrogenated nitrile butadiene rubber (HNBR), natural rubber, nitrile butadiene rubber (NBR), certain fluoropolymers, silicone rubber, polyisoprene, ethylene vinyl acetate (EVA), chlorosulfonyl rubber, fluorinated poly(arylene ether) (FPAE), polyether ketones, polysulfones, polyether imides, diepoxides, diisocyanates, diisothiocyanates, formaldehyde resins, amino resins, polyurethanes, unsaturated polyethers, polyglycol vinyl ethers, polyglycol divinyl ethers, copolymers thereof, and those described in U.S. Patent No. 6,183.901 to Ying et al. of the common assignee for protective coating layers for separator layers.

Additional examples of crosslinkable or crosslinked polymers include UV/E-beam crosslinked Ultrason® or similar polymers (i.e., polymers comprising an amorphous blend of one or more of poly(sulfone), poly(ethersulfone), and poly(phenylsulfone)), UV crosslinked Ultrason®-polyalkyleneoxide copolymers, UV/E-beam crosslinked Ultrason®-acrylamide blends, crosslinked polyisobutylene-polyalkyleneoxide copolymers, crosslinked branched polyimides (BPI),crosslinked maleinimide-Jeffamine polymers (MSI gels), crosslinked acrylamides, and combinations thereof.

Those of ordinary skill in the art can choose appropriate polymers that can be crosslinked, as well as suitable methods of crosslinking, based upon general knowledge of the art in combination with the description herein. Crosslinked polymer materials may further comprise salts, for example, lithium salts, to enhance lithium ion conductivity.

If a crosslinkable polymer is used, the polymer (or polymer precursor) may include one or more crosslinking agents. A crosslinking agent is a molecule with a reactive portion(s) designed to interact with functional groups on the polymer chains in a manner that will form a crosslinking bond between one or more polymer chains. Examples of crosslinking agents that can crosslink polymeric materials used for support layers described herein include, but are not limited to: polyamide-epichlorohydrin (polycup 172); aldehydes (e.g., formaldehyde and urea-formaldehyde); dialdehydes (e.g., glyoxal glutaraldehyde, and hydroxyadipaldehyde); acrylates (e.g., ethylene glycol diacrylate, di(ethylene glycol) diacrylate, tetra(ethylene glycol) diacrylate, methacrylates, ethylene glycol dimethacrylate, di(ethylene glycol) dimethacrylate, tri(ethylene glycol) dimethacrylate); amides (e.g., N,N'-methylenebisacrylamide, N,N'-ethylenebisacrylamide, N,N'-(1,2-dihydroxyethylene)bisacrylamide, N-(1-hydroxy-2,2-dimethoxyethyl)acrylamide); silanes (e.g., methyltrimethoxysilane, methyltriethoxysilane, tetramethoxysilane (TMOS), tetraethoxysilane (TEOS), tetrapropoxysilane, methyltris(methylethyldetoxime)silane, methyltris(acetoxime)silane, methyltris(methylisobutylketoxime)silane, dimethyldi(methylethyldetoxime)silane, trimethyl(methylethylketoxime)silane, vinyltris(methylethylketoxime)silane, methylvinyldi(mtheylethylketoxime)silane, methylvinyldi(cyclohexaneoneoxxime)silane, vinyltris(mtehylisobutylketoxime)silane, methyltriacetoxysilane, tetraacetoxysilane, and phenyltris(methylethylketoxime)silane); divinylbenzene; melamine; zirconium ammonium carbonate; dicyclohexylcarbodiimide/dimethylaminopyridine (DCC/DMAP); 2-chloropyridinium ion; 1-hydroxycyclohexylphenyl ketone; acetophenon dimethylketal; benzoylmethyl ether; aryl triflourovinyl ethers; benzocyclobutenes; phenolic resins (e.g., condensates of phenol with formaldehyde and lower alcohols, such as methanol, ethanol, butanol, and isobutanol), epoxides; melamine resins (e.g., condensates of melamine with formaldehyde and lower alcohols, such as methanol, ethanol, butanol, and isobutanol); polyisocyanates; dialdehydes; and other crosslinking agents known to those of ordinary skill in the art.

Other classes of polymers that may be suitable for use in a support layer may include, but are not limited to, polyamines (e.g., poly(ethylene imine) and polypropylene imine (PPI)); polyamides (e.g., poly(ε-caprolactam) (Nylon 6), poly(hexamethylene adipamide) (Nylon 66)), polyimides (e.g., polyimide, polynitrile, and poly(pyromellitimide-1,4-diphenyl ether) (Kapton)); vinyl polymers (e.g., polyacrylamide, poly(2-vinyl pyridine), poly(N-vinylpyrrolidone), poly(methylcyanoacrylate), poly(ethylcyanoacrylate), poly(butylcyanoacrylate), poly(isobutylcyanoacrylate), poly(vinyl acetate), poly (vinyl alcohol), poly(vinyl chloride), poly(vinyl fluoride), poly(2-vinyl pyridine), polychlorotrifluoro ethylene, and poly(isohexylcynaoacrylate)); polyacetals; polyolefins (e.g., poly(butene-1), poly(n-pentene-2), polypropylene, polytetrafluoroethylene); polyesters (e.g., polycarbonate, polybutylene terephthalate, polyhydroxybutyrate); polyethers (poly(ethylene oxide) (PEO), poly(propylene oxide) (PPO), poly(tetramethylene oxide) (PTMO)); vinylidene polymers (e.g., polyisobutylene, poly(methyl styrene), poly(methylmethacrylate) (PMMA), poly(vinylidene chloride), and poly(vinylidene fluoride)); polyaramides (e.g., poly(imino-1,3-phenylene iminoisophthaloyl) and poly(imino-1,4-phenylene iminoterephthaloyl)); polyheteroaromatic compounds (e.g., polybenzimidazole (PBI), polybenzobisoxazole (PBO) and polybenzobisthiazole (PBT)); polyheterocyclic compounds (e.g., polypyrrole); polyurethanes; phenolic polymers (e.g., phenol-formaldehyde); polyalkynes (e.g., polyacetylene); polydienes (e.g., 1,2-polybutadiene, cis or trans-1,4-polybutadiene); polysiloxanes (e.g., poly(dimethylsiloxane) (PDMS), poly(diethylsiloxane) (PDES), polydiphenylsiloxane (PDPS), and polymethylphenylsiloxane (PMPS)); and inorganic polymers (e.g., polyphosphazene, polyphosphonate, polysilanes, polysilazanes).

The molecular weight of a polymer may be chosen to achieve a particular adhesive affinity and can vary in a support layer. For example, the molecular weight of a polymer used in a support layer may be greater than or equal to 1,000 g/mol, greater than or equal to 5,000 g/mol, greater than or equal to 10,000 g/mol, greater than or equal to 15,000 g/mol, greater than or equal to 20,000 g/mol, greater than or equal to 25,000 g/mol, greater than or equal to 30,000 g/mol, greater than or equal to 50,000 g/mol, greater than or equal to 100,000 g/mol or greater than or equal to 150,000 g/mol. For example, the molecular weight of a polymer used in a support layer may be less than or equal to 150,000 g/mol, less than or equal to 100,000 g/mol, less than or equal to 50,000 g/mol, less than or equal to 30,000 g/mol, less than or equal to 25,000 g/mol, less than or equal to 20,000 g/mol, less than less than or equal to 10,000 g/mol, less than or equal to 5,000 g/mol, or less than or equal to 1,000 g/mol. Other ranges are also possible. Combinations of the above-referenced ranges are also possible (e.g., greater than or equal to about 5,000 g/mol and less than or equal to about 50,000 g/mol).

When polymers are used, the polymer may be substantially crosslinked, substantially uncrosslinked, or partially crosslinked as the current disclosure is not limited in this fashion. Further, the polymer may be substantially crystalline, partially crystalline, or substantially amorphous. Without wishing to be bound by theory, polymers which are amorphous may exhibit smoother surfaces since crystallization of the polymer may lead to increased surface roughness.

The release layer may be formed of or may include a wax.

The polymer materials listed above and described herein may further comprise salts, for example, lithium salts (e.g., LiSCN, LiBr, Lil, LiClO₄, LiAsF₆, LiSO₃CF₃, LiSO₃CH₃, LiBF₄, LiB(Ph)₄, LiPF₆, LiC(SO₂CF₃)₃, and LiN(SO₂CF₃)₂), to enhance lithium ion conductivity.

As described herein, an article as described herein may include a removable carrier to facilitate fabrication of an article as described herein. Any suitable material can be used for the removable carrier. The material (and thickness) of the carrier may be chosen at least in part due to its ability to withstand certain processing conditions such as high temperature. The substrate material may also be chosen at least in part based on its adhesive affinity to a release layer. In some cases, the removable carrier is a polymeric material. Examples of suitable materials that can be used to form all or portions of a removable carrier include certain of those described herein suitable as release layers, optionally with modified molecular weight, cross-linking density, and/or addition of additives or other components. For example, a removable carrier comprises a polyester such as a polyethylene terephthalate (PET) (e.g., optical grade polyethylene terephthalate), polyolefins, polypropylene, nylon, polyvinyl chloride, and polyethylene (which may optionally be metalized). In some cases, a carrier comprises glass, a metal or a ceramic material. In some embodiments, a carrier includes a film that may be optionally disposed on a thicker substrate material. For instance, a carrier includes a polymer film or a metalized polymer film (using various metals such as aluminum and copper). A removable carrier may also include additional components such as fillers, binders, and/or surfactants.

The removable carrier may have any suitable thickness. For instance, the thickness of a removable carrier may be greater than or equal to about 5 µm, greater than or equal to about 15 µm, greater than or equal to about 25 µm, greater than or equal to about 50 µm, greater than or equal to about 75 µm, greater than or equal to about 100 µm, greater than or equal to about 200 µm, greater than or equal to about 500 µm, or greater than or equal to about 1 mm. For instance, the removable carrier may have a thickness of less than or equal to about 10 mm, less than or equal to about 5 mm, less than or equal to about 3 mm, or less than or equal to about 1 mm. Combinations of the above-referenced ranges are also possible (e.g., greater than or equal to about 100 µm and less than or equal to about 1 mm). Other ranges are also possible. In some cases, the removable carrier has a thickness that is equal to or greater than the thickness of the release layer.

The one or more removable carriers may be left intact with an article described herein, but may be delaminated before elements of the article are incorporated into an electrochemical cell. For instance, the article may be packaged and shipped to a manufacturer who may then use the article for producing an electrochemical cell. Therefore, the article may be inserted into an air-tight and/or moisture-tight package to prevent or inhibit deterioration and/or contamination of one or more components of the electrode structure. The one or more carriers can facilitate handling and transportation of the article. For instance, the carrier(s) may be relatively thick and have a relatively high rigidity or stiffness, which can prevent or inhibit the electrode from distorting during handling. The removable carrier(s) can be removed by the manufacturer before, during, or after assembly of an electrochemical cell.

An electrochemical cell as described herein may include one or more separators, for example two separators. Without wishing to be bound by theory, the addition of a second separator to an electrochemical cell may help prevent dendrite formation, may compensate for any mechanical weakness in the first separator due to its thickness, and/or may compensate for any damage (e.g., a pinprick hole, a tear) that it may have incurred during processing to form an electrochemical cell in which it is positioned. Herein, it may be preferable to use two thin separators than to use one thick separator having the same overall thicknesses as the two thin separators. When more than one separator is present, each separator may individually have some, all, or none of the properties listed below. Each separator present may be substantially similar in composition and/or morphology to any other separator present, or may be substantially different in composition and/or morphology from any other separator present. The separator(s) generally comprise a polymeric material (e.g., polymeric material that does or does not swell upon exposure to electrolyte). The separator(s) are located between the electrolyte and an electrode (e.g., a first electrode, a second electrode, an anode, a cathode).

The separator(s) are configured to inhibit (e.g., prevent) physical contact between a first electrode and a second electrode, which could result in short circuiting of the electrochemical cell. The separator(s) are configured to be substantially electronically non-conductive, which can inhibit the degree to which the separator causes short circuiting of the electrochemical cell. For example, all or portions of the separator(s) can be formed of a material with a bulk electronic resistivity of greater than or equal to 10⁴ Ohm*meter, greater than or equal to 10⁵ Ohm*meter, greater than or equal to 10¹⁰ Ohm*meter, greater than or equal to 10¹⁵ Ohm*meter, or greater than or equal to 10²⁰ Ohm*meter. Bulk electronic resistivity may be measured at room temperature (e.g., 25 °C).

The separator(s) can be conductive to lithium ions, or substantially non-conductive to lithium ions. For example, the average lithium ion conductivity of one or more of the separator(s) may be 10⁻⁷ S/cm, 10⁻⁶ S/cm, 10⁻⁵ S/cm, 10⁻⁴ S/cm, 10⁻² S/cm, 10⁻¹ S/cm. For example, the average lithium ion conductivity of one or more of the separator(s) may be less than or equal to 1 S/cm, less than or equal to 10⁻¹ S/cm, less than or equal to 10⁻² S/cm, less than or equal to 10⁻³ S/cm, less than or equal to 10⁻⁴ S/cm, less than or equal to 10⁻⁵ S/cm, less than or equal to 10⁻⁶ S/cm, less than or equal to 10⁻⁷ S/cm, or less than or equal to 10⁻⁸ S/cm. Combinations of the above-referenced ranges are also possible (e.g., an average lithium ion conductivity of greater than or equal to 10⁻⁸ S/cm and less than or equal to 10⁻¹ S/cm). Other values of lithium ion conductivity are also possible. Conductivity may be measured by using EIS spectroscopy as described above.

The separator(s) can be solid or in the form of a gel. The separator(s) may be porous to allow an electrolyte solvent to pass through it. In some cases, one or more of the separator(s) do not substantially include a solvent (like a separator in the form of a gel), except for solvent that may pass through or reside in the pores of the separator(s).

A separator can be made of a variety of materials. The separator(s) may be formed of polymeric material or formed of inorganic material (e.g., glass fiber filter papers). Examples of suitable separator materials include, but are not limited to, polyolefins (e.g., polyethylenes, poly(butene-1), poly(n-pentene-2), polypropylene, polytetrafluoroethylene), polyamines (e.g., poly(ethylene imine) and polypropylene imine (PPI)); polyamides (e.g., poly(ε-caprolactam) (Nylon 6), poly(hexamethylene adipamide) (Nylon 66)), polyimides (e.g., polyimide, polynitrile, and poly(pyromellitimide-1,4-diphenyl ether) (Kapton®) (NOMEX®) (KEVLAR®)); polyether ether ketone (PEEK); vinyl polymers (e.g., polyacrylamide, poly(2-vinyl pyridine), poly(N-vinylpyrrolidone), poly(methylcyanoacrylate), poly(ethylcyanoacrylate), poly(butylcyanoacrylate), poly(isobutylcyanoacrylate), poly(vinyl acetate), poly (vinyl alcohol), poly(vinyl chloride), poly(vinyl fluoride), poly(2-vinyl pyridine), polychlorotrifluoro ethylene, and poly(isohexylcynaoacrylate)); polyacetals; polyesters (e.g., polycarbonate, polybutylene terephthalate, polyhydroxybutyrate); polyethers (poly(ethylene oxide) (PEO), poly(propylene oxide) (PPO), poly(tetramethylene oxide) (PTMO)); vinylidene polymers (e.g., polyisobutylene, poly(methyl styrene), poly(methylmethacrylate) (PMMA), poly(vinylidene chloride), and poly(vinylidene fluoride)); polyaramides (e.g., poly(imino-1,3-phenylene iminoisophthaloyl) and poly(imino-1,4-phenylene iminoterephthaloyl)); polyheteroaromatic compounds (e.g., polybenzimidazole (PBI), polybenzobisoxazole (PBO) and polybenzobisthiazole (PBT)); polyheterocyclic compounds (e.g., polypyrrole); polyurethanes; phenolic polymers (e.g., phenol-formaldehyde); polyalkynes (e.g., polyacetylene); polydienes (e.g., 1,2-polybutadiene, cis or trans-1,4-polybutadiene); polysiloxanes (e.g., poly(dimethylsiloxane) (PDMS), poly(diethylsiloxane) (PDES), polydiphenylsiloxane (PDPS), and polymethylphenylsiloxane (PMPS)); and inorganic polymers (e.g., polyphosphazene, polyphosphonate, polysilanes, polysilazanes). More specifically the polymer may be selected from poly(n-pentene-2), polypropylene, polytetrafluoroethylene, polyamides (e.g., poly(ε-caprolactam) (Nylon 6), poly(hexamethylene adipamide) (Nylon 66)), polyimides (e.g., polynitrile, and poly(pyromellitimide-1,4-diphenyl ether) (Kapton®) (NOMEX®) (KEVLAR®)), polyether ether ketone (PEEK), and combinations thereof.

The mechanical and electronic properties (e.g., conductivity, resistivity) of these polymers are known. Accordingly, those of ordinary skill in the art can choose suitable materials based on their mechanical and/or electronic properties (e.g., ionic and/or electronic conductivity/resistivity), and/or can modify such polymers to be ionically conducting (e.g., conductive towards single ions) based on knowledge in the art, in combination with the description herein. For example, the polymer materials listed above and herein may further comprise salts, for example, lithium salts (e.g., LiSCN, LiBr, Lil, LiClO₄, LiAsF₆, LiSO₃CF₃, LiSO₃CH₃, LiBF₄, LiB(Ph)₄, LiPF₆, LiC(SO₂CF₃)₃, and LiN(SO₂CF₃)₂), and/or others described herein, to enhance lithium ion conductivity, if desired.

The separator(s) may be porous, or may be substantially non-porous. When present, the average pore size of the separator may be less than or equal to 5 µm, less than or equal to 1 µm, less than or equal to 500 nm, less than or equal to 300 nm, less than or equal to 100 nm, or less than or equal to 50 nm. The average pore size of the separator may be greater or equal to than 50 nm, greater than or equal to 100 nm, greater than or equal to 300 nm, greater than or equal to 500 nm, or greater than or equal to 1 µm. Other values are also possible. Combinations of the above-noted ranges are also possible (e.g., a pore size of less than or equal to 300 nm and greater than or equal to 100 nm). The pore size of the separator may be determined using ASTM standard D4284-07 as described above.

An electrochemical cell as described herein includes a second electrode (e.g., a cathode active electrode species in a cathode of an electrochemical cell described herein) can comprise metal oxides. An intercalation electrode (e.g., a lithium-intercalation cathode) may be used as the second electrode. Non-limiting examples of suitable materials that may intercalate ions of an electroactive material (e.g., alkaline metal ions) include oxides, phosphates, titanium sulfide, and iron sulfide. The second electrode may comprise an intercalation electrode that comprises a lithium transition metal oxide or a lithium transition metal phosphate. Additional examples include LiₓCoO₂, LiₓNiO₂, LiₓMnO₂, LiₓMn₂O₄, LiₓCoPO₄, LixMnPO₄, LiCoₓNi₍₁₋ₓ₎O₂, LiCoₓNi_{y}Mn_{(1-x-y)}O₂ (e.g., LiNi_{1/3}Mn_{1/3}CO_{1/3}O₂, LiNi_{3/5}Mn_{1/5}CO_{1/5}O₂, LiNi_{4/5}Mn_{1/10}Co_{1/10}O₂, LiNi_{1/2}Mn_{3/1}Co_{1/5}O₂), LiₓNiPO₄, where (0 < x ≤ 1), LiMnₓNi_{y}O₄ where (x + y = 2) (e.g., LiMn_{1.5}Ni_{0.5}O₄), LiNiₓCo_{y}Al_{z}O₂ where (x + y + z =1), LiFePO₄, and combinations thereof. The electroactive material within the second electrode can comprise lithium transition metal phosphates (e.g., LiFePO₄), which are substituted with borates and/or silicates.

The electroactive material within a second electrode (e.g., a cathode active electrode species in a cathode of an electrochemical cell described herein) can comprise electroactive transition metal chalcogenides, electroactive conductive polymers, and/or electroactive sulfur-containing materials, and combinations thereof. As used herein, the term "chalcogenides" pertains to compounds that contain one or more of the elements of oxygen, sulfur, and selenium. Examples of suitable transition metal chalcogenides include, but are not limited to, the electroactive oxides, sulfides, and selenides of transition metals selected from the group consisting of Mn, V, Cr, Ti, Fe, Co, Ni, Cu, Y, Zr, Nb, Mo, Ru, Rh, Pd, Ag, Hf, Ta, W, Re, Os, and Ir. For instance, the transition metal chalcogenide is selected from the group consisting of the electroactive oxides of nickel, manganese, cobalt, and vanadium, and the electroactive sulfides of iron.

A second electrode (e.g., as a cathode active electrode species in the cathode of the electrochemical cells described herein) can comprise an electroactive conductive polymer. Examples of suitable electroactive conductive polymers include, but are not limited to, electroactive and electronically conductive polymers selected from the group consisting of polypyrroles, polyanilines, polyphenylenes, polythiophenes, and polyacetylenes. For instance, polypyrroles, polyanilines, and/or polyacetylenes are used as conductive polymers.

An electrochemical cell described herein may include a second electrode with an electroactive material (e.g., a cathode active electrode species in a cathode of an electrochemical cell described herein) having a moderate voltage with respect to lithium metal. The voltage of an electroactive material with respect to lithium metal may be measured by first cycling an electrochemical cell comprising the electroactive material and lithium metal at least four times (e.g., 5 times, 6 times, 8 times, 10 times) at a rate of C/5, then discharging the electrochemical cell at a rate of C/5 and measuring the voltage as the cell discharges. The average voltage measured over the discharge process is then determined, and this value is considered to be the voltage with respect to lithium metal. For example, the electroactive material within the second electrode has a voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. For example, the electroactive material within the second electrode has a voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

An electrochemical cell described herein may include a second electrode with an electroactive material (e.g., a cathode active electrode species in a cathode of an electrochemical cell described herein) having a moderate open circuit voltage with respect to lithium metal. The open circuit voltage of an electroactive material with respect to lithium metal may be measured by determining the open circuit voltage of a battery comprising the electroactive material and lithium metal when the battery is charged to half its capacity. This may be accomplished by first determining the capacity of the battery by cycling the battery to determine its capacity. The battery can then be charged to half of its measured capacity and allowed to rest for two minutes. After these steps, the open circuit voltage may be measured. For example, the electroactive material within the second electrode has an open circuit voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. For example, the electroactive material within the second electrode has an open circuit voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

Characteristics of electroactive materials (e.g., for a second electrode) other than their voltages and open circuit voltages with respect to lithium may also be relevant in some cases. For example, an electrochemical cell may include a second electrode comprising an electroactive material (e.g., a cathode active electrode species in a cathode of an electrochemical cell described herein) that exhibits one or more plateaus in the value of voltage with respect to lithium as a function of cycle life during charging and/or discharging, and the value of the plateau(s) may be one or more of the values described above in relation to the voltage of the material with respect to lithium metal. As used herein, an electroactive material exhibits a plateau (i.e., a plateau voltage) when it shows a constant or substantially constant voltage (e.g., varying by less than or equal to 10%, or less than or equal to 5%) with respect to lithium during at least some portion of a charging and/or discharging procedure. The voltage at which a plateau occurs for an electroactive material (i.e., a plateau voltage) may be determined by employing the same procedure used to determine the voltage of an electroactive material with respect to lithium metal, evaluating whether any regions consistent with plateaus are observed, and determining the average voltage in those region(s) if present. For example, the electroactive material within the second electrode has a plateau voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. For example, the electroactive material within the second electrode has a plateau voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

As another example, the electrochemical cell may include a second electrode comprising an electroactive material that would be suitable for charging to less than 5 V, less than 4.5 V, less than 4 V, or less than 3.5 V under normal operating conditions (e.g., if one were to charge to, e.g., 5 V, 4.5 V, 4 V, or 3.5 V or higher, respectively, it would typically be considered an abuse test, would not be recommended by the manufacturer, and/or would present safety concerns).

One or more of the voltages measured during the charge and/or discharge process in a cell comprising a lithium metal electrode (e.g., maximum voltage, minimum voltage, median voltage, modal voltage) may have one or more of the values described above in relation to the average voltage.

For example, the electroactive material within the second electrode has a maximum voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. For example, the electroactive material within the second electrode has a maximum voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

For example, the electroactive material within the second electrode has a minimum voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. For example, the electroactive material within the second electrode has a minimum voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

For example, the electroactive material within the second electrode has a median voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. For example, the electroactive material within the second electrode has a median voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

For example, the electroactive material within the second electrode has a modal voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. For example, the electroactive material within the second electrode has a modal voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

Table 1, below, shows the voltage with respect to lithium metal of several cathode materials.

**Table 1**

| Material | Voltage (V) |
|---|---|
| FeS | 1.2-1.5 |
| FeS2 | 1.4-1.6 |
| BiPb₂O₅ | 1.5 |
| Bi₂O₃ | 1.5 |
| CuO | 1.5 |
| CuS | 1.5 |
| PbCuS | 1.5 |
| Electroactive conductive polymers | <2 - 3.7 |
| Transition metal sulfides and transition metal selenides | 1.2-2.1 |
| Sulfur | 2.1-2.2 |
| Ag₂V₄O₁₁ | 2.5 (first plateau); 1.5 (second plateau) |
| I₂ | 2.8 |
| SO₂ | 2.85 |
| MnO₂ | 3 |
| (CF)x | 3 |
| Ag₂CrO₄ | 3.1 (first plateau); 2.6 (second plateau) |
| LiFePO₄ | 3.3 |
| V₂O₅ | 3.3 (first plateau); 2.4 (second plateau) |
| CuCl₂ | 3.3 (first plateau); 2.9 (second plateau); 2.5 (third plateau) |
| SOCl₂ | 3.5 (3.7 - 3.8 in the presence of BrCI) |
| SO₂Cl₂ | 3.7 |
| CoO₂ | 4 |
| LiNiₓMnₓCoₓO₂ | 4.0 |
| LiNiO₂ | 4.0 |
| LiMn₂O₄ | 4.1 (first plateau); 3.9 (second plateau) |
| LixMnPO₄ | 4.1 |
| LiCoO₂ | 4.2 |
| LiMn_{3/2}Ni_{1/2}O4 | 4.7-5.1 |
| LiCoPO₄ | 4.8 |
| LixNiPO₄ | 5.1 |

Active electrode materials for use in second electrodes (e.g., cathodes) in electrochemical cells described herein may include electroactive sulfur-containing materials (e.g., lithium-sulfur electrochemical cells). "Electroactive sulfur-containing materials," as used herein, relates to electroactive materials which comprise the element sulfur in any form, wherein the electrochemical activity involves the oxidation or reduction of sulfur atoms or moieties. The nature of the electroactive sulfur-containing materials useful in the practice of this invention may vary widely, as known in the art. For example, the electroactive sulfur-containing material comprises elemental sulfur, or a mixture of elemental sulfur and a sulfur-containing polymer. Thus, suitable electroactive sulfur-containing materials may include, but are not limited to, elemental sulfur and organic materials comprising sulfur atoms and carbon atoms, which may or may not be polymeric. Suitable organic materials include those further comprising heteroatoms, conductive polymer segments, composites, and conductive polymers.

The sulfur-containing material (e.g., in an oxidized form) comprises a polysulfide moiety, Sₘ, selected from the group consisting of covalent Sₘ moieties, ionic Sₘ moieties, wherein m is an integer equal to or greater than 3. For example, m of the polysulfide moiety Sₘ of the sulfur-containing polymer is an integer equal to or greater than 6 or an integer equal to or greater than 8. In some cases, the sulfur-containing material may be a sulfur-containing polymer. For example, the sulfur-containing polymer has a polymer backbone chain and the polysulfide moiety Sₘ is covalently bonded by one or both of its terminal sulfur atoms as a side group to the polymer backbone chain, or the polysulfide moiety Sₘ is incorporated into the polymer backbone chain by covalent bonding of the terminal sulfur atoms of the polysulfide moiety.

The electroactive sulfur-containing material may comprise more than 50% by weight of sulfur, more than 75% by weight of sulfur or more than 90% by weight of sulfur.

An electrode as described herein may be positioned in an electrochemical cell that comprises at least one current collector. Materials for the current collector may be selected from metals (e.g., copper, nickel, aluminum, passivated metals, and other appropriate metals), metallized polymers, electrically conductive polymers, polymers comprising conductive particles dispersed therein, and other appropriate materials. The current collector(s) may be adjacent to electrode(s) within the electrochemical cell. Herein, a current collector is adjacent to an electroactive material or to a layer within an electrode. The current collector may be deposited onto the electrode layer using physical vapor deposition, chemical vapor deposition, electrochemical deposition, sputtering, doctor blading, flash evaporation, or any other appropriate deposition technique for the selected material. The current collector may be formed separately and bonded to the electrode structure. It should be appreciated, however, that sometimes a current collector separate from the electroactive layer is not needed or present.

An electrochemical cell as described herein usually includes an electrolyte, such as a non-aqueous electrolyte. Suitable non-aqueous electrolytes include organic electrolytes and/or aprotic electrolytes such as liquid electrolytes, gel polymer electrolytes, and solid polymer electrolytes. These electrolytes may optionally include one or more ionic electrolyte salts (e.g., to provide or enhance lithium ion conductivity) as described herein. Examples of useful non-aqueous liquid electrolyte solvents include, but are not limited to, non-aqueous organic solvents, such as, for example, N-methyl acetamide, acetonitrile, acetals, ketals, esters (e.g., esters of carbonic acids), carbonates (e.g., dimethyl carbonate, diethyl carbonate, ethyl methyl carbonate, propylene carbonate, ethylene carbonate, fluoroethylene carbonate, difluoroethylene carbonate), sulfones, sulfites, sulfolanes, sulfonimidies (e.g., bis(trifluoromethane)sulfonimide lithium salt), aliphatic ethers, acyclic ethers, cyclic ethers, glymes, polyethers, phosphate esters (e.g., hexafluorophosphate), siloxanes, dioxolanes, N-alkylpyrrolidones, nitrate containing compounds, substituted forms of the foregoing, and blends thereof. Examples of acyclic ethers that may be used include, but are not limited to, diethyl ether, dipropyl ether, dibutyl ether, dimethoxymethane, trimethoxymethane, 1,2-dimethoxyethane, diethoxyethane, 1,2-dimethoxypropane, and 1,3-dimethoxypropane. Examples of cyclic ethers that may be used include, but are not limited to, tetrahydrofuran, tetrahydropyran, 2-methyltetrahydrofuran, 1,4-dioxane, 1,3-dioxolane, and trioxane. Examples of polyethers that may be used include, but are not limited to, diethylene glycol dimethyl ether (diglyme), triethylene glycol dimethyl ether (triglyme), tetraethylene glycol dimethyl ether (tetraglyme), higher glymes, ethylene glycol divinyl ether, diethylene glycol divinyl ether, triethylene glycol divinyl ether, dipropylene glycol dimethyl ether, and butylene glycol ethers. Examples of sulfones that may be used include, but are not limited to, sulfolane, 3-methyl sulfolane, and 3-sulfolene. Fluorinated derivatives of the foregoing are also useful as liquid electrolyte solvents.

Mixtures of the solvents described herein may also be used. For example, mixtures of solvents are selected from the group consisting of 1,3-dioxolane and dimethoxyethane, 1,3-dioxolane and diethyleneglycol dimethyl ether, 1,3-dioxolane and triethyleneglycol dimethyl ether, and 1,3-dioxolane and sulfolane. For instance, the mixture of solvents comprises dimethyl carbonate and ethylene carbonate, or ethylene carbonate and ethyl methyl carbonate. The weight ratio of the two solvents in the mixtures may range, from about 5 wt% : 95 wt% to 95 wt% : 5 wt%. For example, the electrolyte comprises a 50 wt% : 50 wt% mixture of dimethyl carbonate : ethylene carbonate, or a 30 wt% : 70 wt% mixture of ethylene carbonate : ethyl methyl carbonate.

Non-limiting examples of suitable gel polymer electrolytes include polyethylene oxides, polypropylene oxides, polyacrylonitriles, polysiloxanes, polyimides, polyphosphazenes, polyethers, sulfonated polyimides, perfluorinated membranes (NAFION resins), polydivinyl polyethylene glycols, polyethylene glycol diacrylates, polyethylene glycol dimethacrylates, derivatives of the foregoing, copolymers of the foregoing, cross-linked and network structures of the foregoing, and blends of the foregoing.

Non-limiting examples of suitable solid polymer electrolytes include polyethers, polyethylene oxides, polypropylene oxides, polyimides, polyphosphazenes, polyacrylonitriles, polysiloxanes, derivatives of the foregoing, copolymers of the foregoing, cross-linked and network structures of the foregoing, and blends of the foregoing.

An electrolyte may comprise at least one lithium salt. For example, in some cases, the at least one lithium salt is selected from the group consisting of LiNO₃, LiPF₆, LiBF₄, LiClO₄, LiAsF₆, Li₂SiF₆, LiSbF₆, LiAlCl₄, lithium bis-oxalatoborate, LiCF₃SO₃, LiN(SO₂F)₂, LiC(CnF₂ₙ₊₁SO₂)₃, wherein n is an integer in the range of from 1 to 20, and (CnF₂ₙ₊₁SO₂)ₘXLi with n being an integer in the range of from 1 to 20, m being 1 when X is selected from oxygen or sulfur, m being 2 when X is selected from nitrogen or phosphorus, and m being 3 when X is selected from carbon or silicon.

The use of certain electrodes, composite protective layers, and/or methods described herein may result in improved capacity after repeated cycling of an electrochemical cell. For example, after alternatively discharging and charging the cell three times, the cell exhibits at least about 50%, at least about 80%, at least about 90%, or at least about 95% of the cell's initial capacity at the end of the third cycle. In some cases, after alternatively discharging and charging the cell ten times, the cell exhibits at least about 50%, at least about 80%, at least about 90%, or at least about 95% of the cell's initial capacity at the end of the tenth cycle. In still further cases, after alternatively discharging and charging the cell twenty-five times, the cell exhibits at least about 50%, at least about 80%, at least about 90%, or at least about 95% of the cell's initial capacity at the end of the twenty-fifth cycle. For example, the electrochemical cell has a capacity of at least 20 mAh at the end of the cell's third, 10th, 25^{th}, 30th, 40th, 45th, 50th, or 60th cycle.

An electrochemical cell comprising a composite protective layer as described herein may have a higher cycle life than an otherwise equivalent electrochemical cell lacking the composite protective layer. The cycle life may be greater than or equal to 15% larger than an otherwise equivalent electrochemical cell lacking the composite protective layer, greater than or equal to 20% larger than an otherwise equivalent electrochemical cell lacking the composite protective layer, greater than or equal to 30% larger than an otherwise equivalent electrochemical cell lacking the composite protective layer, greater than or equal to 40% larger than an otherwise equivalent electrochemical cell lacking the composite protective layer, greater than or equal to 50% larger than an otherwise equivalent electrochemical cell lacking the composite protective layer, greater than or equal to 60% larger than an otherwise equivalent electrochemical cell lacking the composite protective layer, greater than or equal to 75% larger than an otherwise equivalent electrochemical cell lacking the composite protective layer, greater than or equal to 100% larger than an otherwise equivalent electrochemical cell lacking the composite protective layer, greater than or equal to 115% larger than an otherwise equivalent electrochemical cell lacking the composite protective layer, greater than or equal to 125% larger than an otherwise equivalent electrochemical cell lacking the composite protective layer, greater than or equal to 150% larger than an otherwise equivalent electrochemical cell lacking the composite protective layer, greater than or equal to 175% larger than an otherwise equivalent electrochemical cell lacking the composite protective layer, greater than or equal to 200% larger than an otherwise equivalent electrochemical cell lacking the composite protective layer, greater than or equal to 225% larger than an otherwise equivalent electrochemical cell lacking the composite protective layer, greater than or equal to 250% larger than an otherwise equivalent electrochemical cell lacking the composite protective layer, or greater than or equal to 275% larger than an otherwise equivalent electrochemical cell lacking the composite protective layer. The cycle life may be less than or equal to 300% larger than an otherwise equivalent electrochemical cell lacking the composite protective layer, less than or equal to 275% larger than an otherwise equivalent electrochemical cell lacking the composite protective layer, less than or equal to 250% larger than an otherwise equivalent electrochemical cell lacking the composite protective layer, less than or equal to 225% larger than an otherwise equivalent electrochemical cell lacking the composite protective layer, less than or equal to 200% larger than an otherwise equivalent electrochemical cell lacking the composite protective layer, less than or equal to 175% larger than an otherwise equivalent electrochemical cell lacking the composite protective layer, less than or equal to 150% larger than an otherwise equivalent electrochemical cell lacking the composite protective layer, less than or equal to 125% larger than an otherwise equivalent electrochemical cell lacking the composite protective layer, less than or equal to 115% larger than an otherwise equivalent electrochemical cell lacking the composite protective layer, less than or equal to 100% larger than an otherwise equivalent electrochemical cell lacking the composite protective layer, less than or equal to 75% larger than an otherwise equivalent electrochemical cell lacking the composite protective layer, less than or equal to 60% larger than an otherwise equivalent electrochemical cell lacking the composite protective layer, less than or equal to 50% larger than an otherwise equivalent electrochemical cell lacking the composite protective layer, less than or equal to 40% larger than an otherwise equivalent electrochemical cell lacking the composite protective layer, or less than or equal to 30% larger than an otherwise equivalent electrochemical cell lacking the composite protective layer. Combinations of the above-referenced ranges are also possible (e.g., greater than or equal to 15% and less than or equal to 300% larger than an otherwise equivalent electrochemical cell lacking the composite protective layer, greater than or equal to 60% and less than or equal to 115% larger than an otherwise equivalent electrochemical cell lacking the composite protective layer). Other ranges are also possible.

An electrochemical cell comprising a composite protective layer as described herein may as a whole have a relatively low impedance prior to cycling. The electrochemical cell as a whole may have an initial impedance of less than or equal to 1.0 Ohm, less than or equal to 0.75 Ohms, less than or equal to 0.5 Ohms, or less than or equal to 0.2 Ohms. The electrochemical cell as a whole may have an initial impedance of greater than or equal to 0.1 Ohms, greater than or equal to 0.2 Ohms, greater than or equal to 0.5 Ohms, or greater than or equal to 0.75 Ohms. Combinations of the above-referenced ranges are also possible (e.g., less than or equal to 1.0 Ohm and greater than or equal to 0.1 Ohms, or less than or equal to 0.5 Ohms and greater than or equal to 0.2 Ohms). Other ranges are also possible. Impedance may be measured by using EIS as described herein.

The electrochemical cell comprising a composite protective layer as described herein may as a whole have a relatively low impedance prior to cycling compared to an otherwise equivalent electrochemical cell lacking the composite protective layer. The electrochemical cell as a whole may have an initial impedance of less than or equal to 90% of the impedance of an otherwise equivalent electrochemical cell lacking the composite protective layer, less than or equal to 75% of the impedance of an otherwise equivalent electrochemical cell lacking the composite protective layer, less than or equal to 50% of the impedance of an otherwise equivalent electrochemical cell lacking the composite protective layer, or less than or equal to 25% of the impedance of an otherwise equivalent electrochemical cell lacking the composite protective layer. The electrochemical cell as a whole may have an initial impedance of greater than or equal to 10% of the impedance of an otherwise equivalent electrochemical cell lacking the composite protective layer, greater than or equal to 25% of the impedance of an otherwise equivalent electrochemical cell lacking the composite protective layer, greater than or equal to 50% of the impedance of an otherwise equivalent electrochemical cell lacking the composite protective layer, or greater than or equal to 75% of the impedance of an otherwise equivalent electrochemical cell lacking the composite protective layer. Combinations of the above-referenced ranges are also possible (e.g., less than or equal to 90% and greater than or equal to 10% of the impedance of an otherwise equivalent electrochemical cell lacking the composite protective layer). Other ranges are also possible. Impedance may be measured by using EIS as described herein.

The following examples are intended to illustrate certain embodiments of the present invention, but do not exemplify the full scope of the invention.

The following examples are intended to illustrate certain embodiments of the present invention, but do not exemplify the full scope of the invention.

### EXAMPLE 1

This Example describes the formation of electrochemical cells including electrodes comprising composite protective layers comprising graphite particles with an average lateral particle size between 10 and 300 nm (less than 50 nm in some cases) and an average thickness of between 2 and 500 nm (less than 50 nm in some cases). Herein and in other examples (see below), said graphite particles are referred to as nanographite particles.

To form electrochemical cells with designs A, B, D and E, composite protective layers were formed by depositing a slurry comprising nanographite particles (as defined above), polymer binder (e.g. Kraton 1924 FG or styrene-butadiene rubber), and a solvent for the polymer binder onto a surface of a separator (Celgard 2400), said first separator being disposed on a PET layer which is disposed on a glass carrier. The nanographite particles and polymer binder together made up 5-20 wt% of the slurry; the nanographite particles made up between 2.5-18 wt% of the slurry (4.5-15 wt% in some cases) and the polymer binder made up 0.05-10 wt% of the slurry (0.5-5 wt% in some cases). Slurries were deposited using either an air brushing technique or a Mayer rod, and uniformly coated the surface of the first separator. The coating was allowed to air dry for several hours, and the obtained composite protective layer/first separator/PET layer/glass carrier structure was then placed in a vacuum oven for several hours at a reduced pressure and at a temperature between room temperature and 130 °C. Then, a 15 µm-thick Li layer was vacuum deposited onto the composite protective layer, thus forming a Li/composite protective layer/first separator/PET layer/glass carrier structure. The Li/composite protective layer/first separator/PET layer structure was then released from the glass carrier. Then, the PET layer was removed from the first separator. A second separator (a 9 µm-thick Tonen separator) was placed between the first separator and an LCO (LiCoO₂) or LFP (LiFePO₄) cathode to form a Li/composite protective layer/first separator/second separator/cathode structure. Bilayer cathode-centered cells and triple bilayer cathode-centered cells (consisting of three stacked cathode-centered bilayer cells) were assembled and cycled.

Control electrochemical cells (designs C and F) were fabricated by the procedure described below. A first separator (Celgard 2400) disposed on a surface of a PET layer which is disposed on a glass carrier was placed in a vacuum oven for several hours at a reduced pressure and at a temperature between room temperature and 130 °C. Then, a 15 µm-thick Li layer was vacuum deposited onto the first separator, thus forming a Li/first separator/PET layer/glass carrier structure. The Li/separator/PET layer structure was then released from the glass carrier. The PET layer was then peeled off from the first separator, leaving Li/first separator. A second separator (9 µm-thick Tonen separator) was placed between the first separator (Celgard 2400) and an LCO or LFP cathode to form a Li/first separator/second separator/cathode structure. Bilayer cathode-centered cells and triple bilayer cathode-centered cells were assembled and cycled. Table 2, below, describes properties of the cells and control cells.

**Table 2**

| Cell design | Protective layer composition | Bilayer or triple bilayer | Cathode type | Ratio of cycle life to cycle life of control cells | Initial cell impedance (Ohms) |
|---|---|---|---|---|---|
| A | 90 wt% nanographite; 10 wt% Kraton 1924 FG | Bilayer | LFP | 1.4-1.7 | 2.06-2.21 |
| B | 80 wt% nanographite; 20 wt% Kraton 1924 FG | Bilayer | LFP | 1.4-1.7 | 8.2-10.8 |
| C | N/A | Bilayer | LFP | N/A | 32.7-48.8 |
| D | 90 wt% nanographite; 10 wt% Kraton 1924 FG | Triple bilayer | LCO | 1.6-2.7 | 0.32-0.6 |
| E | 80 wt% nanographite; 20 wt% Kraton 1924 FG | Triple bilayer | LCO | 1.6-2.7 | 0.83-1.03 |
| F | N/A | Triple bilayer | LCO | N/A | 7.88-9.0 |

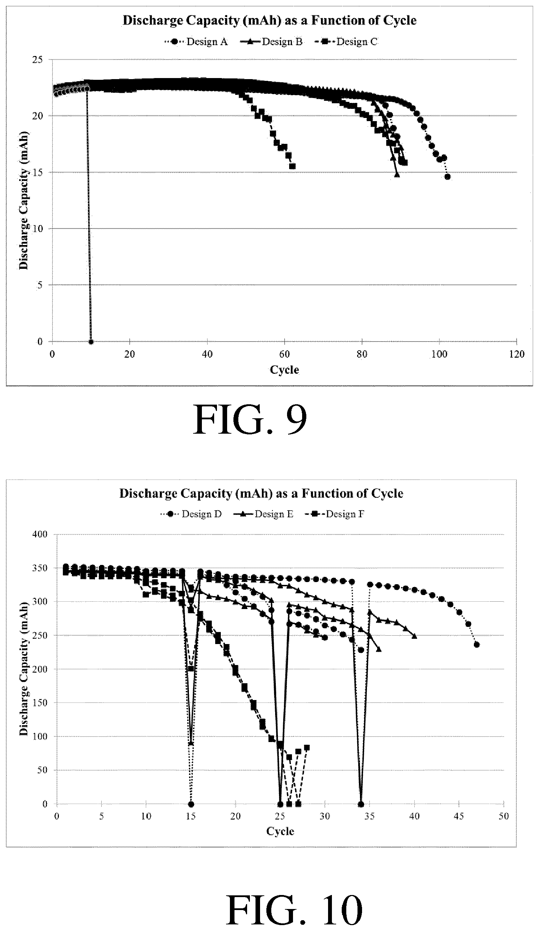

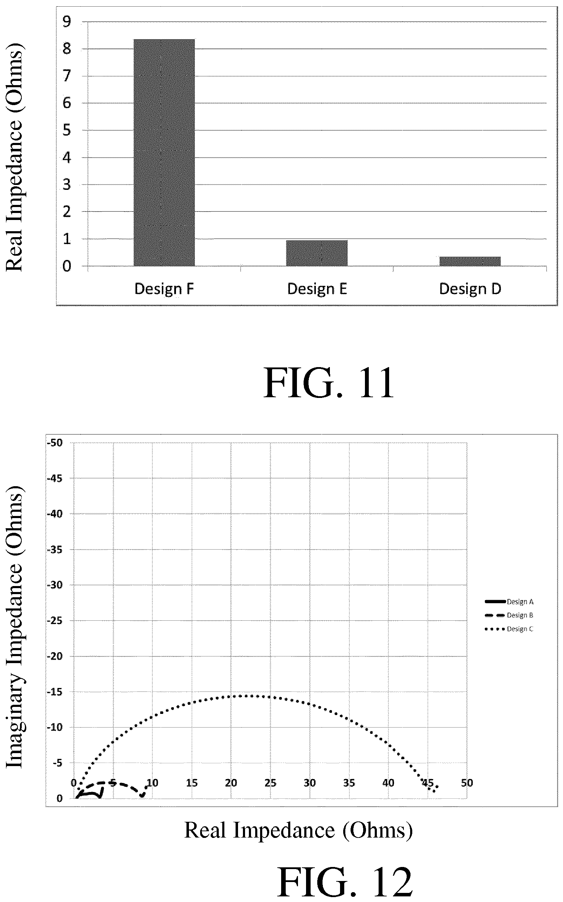

Cells that included the composite protective layer had a longer cycle life and lower impedance than the control cells that did not include the composite protective layer. FIGs. 9 and 12 show cycle life data and initial impedance data, respectively, from individual electrochemical cells with designs A, B and C; FIGs. 10 and 11 show cycle life and initial impedance data, respectively, from individual electrochemical cells with designs D, E and F. The cycle life of cells including an electrode comprising a composite protective layer was larger than cells lacking the composite protective layer and the cells including an electrode comprising a composite protective layer had significantly reduced impedance in comparison to electrochemical cells lacking a composite protective layer.

### EXAMPLE 2

This Example describes the formation of electrochemical cells including electrodes comprising composite protective layers comprising nanographite particles (as defined above).

Bilayer electrochemical cells including an LFP cathode and comprising protective layers were prepared as in Example 1, except that the lithium layer (15 µm-thick) deposited on the surface of a current collector was laminated onto the composite protective layer instead of vapor depositing lithium onto the composite protective layer. Thus, after release from the glass carrier and PET layer, a current collector/Li/composite protective layer/first separator structure was obtained.

Control electrochemical cells were prepared as in Example 1, except that the lithium layer (15 µm-thick) deposited on the surface of a current collector was laminated onto the first separator instead of vapor depositing lithium onto the first separator. Thus, after release from the glass carrier and PET layer, a current collector/Li/first separator structure was obtained.

Cells that included the composite protective layer had initial impedances of between 0.26 and 1 Ohms; control cells had initial impedances between 1.3 and 5.1 Ohms. The cycle life of the cells including the composite protective layer was between 40% and 70% larger than the control cells lacking the composite protective layer.

### EXAMPLE 3

This Example describes the formation of electrochemical cells including electrodes comprising composite protective layers comprising nanographite particles as defined above. Bilayer electrochemical cells including an LFP cathode and comprising protective layers were prepared as in Example 1, except that the first separator was a 9 µm-thick Tonen separator instead of a Celgard 2400 separator and that a lithium layer (15 µm-thick) deposited on the surface of a current collector was laminated onto the composite protective layer instead of vapor depositing lithium onto the composite protective layer. Thus, after release from the glass carrier and the PET layer, a current collector/Li/composite protective layer/first separator structure carrier was obtained. The second separator was Celgard 2400.

Control electrochemical cells were prepared as in Example 1, except that a lithium layer (15 µm-thick) deposited on the surface of a current collector was laminated onto the first separator instead of vapor depositing lithium onto the first separator (a 9 µm-thick Tonen separator). Thus, after release from the glass carrier and PET layer, a current collector/Li/first separator structure was obtained. The second separator was Celgard 2400.

Cells that included the composite protective layer had initial impedances of between 0.26 and 1 Ohms; control cells had initial impedances between 1.3 and 5.1 Ohms. The cycle life of the cells including the composite protective layer was between 40% and 70% larger than the control cells lacking the composite protective layer.

### EXAMPLE 4

This Example describes the formation of electrochemical cells including electrodes comprising composite protective layers comprising fine lamellar graphite particles.

Triple bilayer electrochemical cells including an LCO cathode and comprising protective layers were prepared as in Example 1, except that the slurry used to form the composite protective layer included a water-based colloidal dispersion comprising fine lamellar graphite particles with an average particle size between 0.5 µm and 1 µm (Aquadag E) instead of the above-defined nanographite particles and that a lithium layer deposited on the surface of a current collector was laminated onto the composite protective layer instead of vapor depositing lithium onto the protective layer. The slurry also contained a polymer binder. Thus, after release from the glass carrier and PET layer, a current collector/Li/composite protective layer/first separator structure carrier was obtained.

Control electrochemical cells lacking composite protective layers were prepared as in Example 1, except that a lithium layer deposited on the surface of a current collector was laminated onto the first separator instead of vapor depositing lithium onto the first separator.

Cells that included the composite protective layer had initial impedances between 0.15 and 0.17 Ohms; control cells had initial impedances between 1.56 and 1.8 Ohms.

### EXAMPLE 5

This Example describes the formation of electrochemical cells including electrodes comprising composite protective layers comprising nanographite particles (as defined above).

Composite protective layers were formed by depositing a 5-20 wt% slurry comprising nanographite particles, polymer binder (e.g. Kraton 1924 FG or styrene-butadiene rubber), and a solvent for the polymer binder onto the surface of a 15 µm-thick vacuum deposited lithium layer disposed on a surface of a current collector. The nanographite particles and polymer binder together made up 5-20 wt% of the slurry. Slurries were deposited using either an air brushing technique or a Mayer rod, and uniformly coated the lithium layer. The coating was allowed to air dry for several hours, and the obtained current collector/Li/composite protective layer structure was then placed in a vacuum oven for several hours at a reduced pressure and at a temperature between room temperature and 130 °C. After this step, a first separator (either Celgard 2400 or a 9 µm-thick Tonen separator) was placed on the composite protective layer, forming a current collector/Li/composite protective layer/first separator structure, and a second separator (a 9 µm-thick Tonen separator) was placed on the first separator. Then, a cathode such as an LCO or LFP cathode was placed on the second separator. Bilayer cathode-centered cells and triple bilayer cathode-centered cells including an LFP cathode were assembled and cycled.

Control electrochemical cells were fabricated by the procedure described below. A first separator (Celgard 2400) was allowed to air dry for several hours before being placed in a vacuum oven for several hours at a reduced temperature and at a temperature 50 °C or higher. The first separator was then placed on a 15 µm vapor deposited lithium anode disposed on a surface of a current collector, forming a current collector/Li/first separator structure, and a second separator (a 9 µm-thick Tonen separator) was placed on the first separator. A cathode, such as an LCO or LFP cathode, was placed on the second separator after this step. Bilayer cathode-centered cells and triple bilayer cathode-centered cells were assembled and cycled.

Cells that included the composite protective layer had initial impedances of between 0.154 and 0.3 Ohms (less than 1 Ohm in all cases); control cells had initial impedances between 1.6 and 2 Ohms. The cycle life of the cells including the composite protective layer was between 70% and 160% larger than the control cells lacking the composite protective layer.

### EXAMPLE 6

This Example describes the formation of electrochemical cells including electrodes comprising composite protective layers comprising boron particles.

Composite protective layers were formed by depositing a 5-20% slurry comprising boron particles (as defined above), polymer binder (e.g. Kraton 1924 FG or styrene-butadiene rubber), and a solvent for the polymer binder onto a first separator (Celgard 2400), said first separator being disposed on a surface of a PET layer which is disposed on a glass carrier. The boron particles have a particle size less than 1 µm, but more than 50 nm, typically more than 80 nm. Slurries were deposited using an air brushing technique or a Mayer rod, and uniformly coated the surface of the first separator. The coating was allowed to air dry for several hours, and the obtained composite protective layer/first separator/PET layer/glass carrier structure was then placed in a vacuum oven for several hours at a reduced pressure and at a temperature between room temperature and 130 °C. A 2-3 µm-thick Li layer was then sputtered onto the surface of the composite protective layer, thus forming a Li/composite protective layer/first separator/PET layer/glass carrier structure. A 15 µm-thick vapor deposited Li anode disposed on the surface of a current collector was then laminated with the Li/composite protective layer/first separator/PET layer/glass carrier structure. Thus, a current collector/Li/Li/composite protective layer/first separator/PET layer/Glass carrier structure was obtained. The current collector/Li/Li/composite protective layer/first separator structure was released from the glass carrier. The PET layer was then peeled off the separator structure. A second separator (a 9 µm-thick Tonen separator), was placed between the first separator and an NCM (nickel cobalt manganese) cathode to form a current collector Li/Li/composite protective layer/first separator/second separator/cathode structure. Two triple bilayer cathode-centered cells were assembled and cycled: Design G, with a protective layer including 80 wt% boron particles (as defined above) and 20 wt% Kraton 1924 FG; and Design H, with a protective layer including 90 wt% boron particles (as defined above) and 10 wt% Kraton 1924 FG.

Control electrochemical cells (Design I) were fabricated by the procedure described below. A first separator (Celgard 2400) was allowed to air dry for several hours before being placed in a vacuum oven for several hours at a reduced temperature and at a temperature between room temperature and 130 °C. A 2-3 µm Li layer was then sputtered on the first separator. A 15 µm vapor deposited lithium anode disposed on a surface of a current collector was then laminated with the lithium-coated first separator. Thus, a current collector/Li/Li/first separator structure was obtained. A second separator (9 µm thick Tonen separator), was placed between the first separator and an NCM cathode to form a current collector Li/Li/first separator/second separator/cathode structure. Triple bilayer cathode-centered cells were assembled and cycled. Table 3, below, describes properties of the cells and control cells.

**Table 3**

| Cell design | Protective layer composition | Bilayer or triple bilayer | Cathode type | Initial cell impedance (Ohms) |
|---|---|---|---|---|
| G | 80 wt% boron; 20 wt% Kraton 1924 FG | Triple bilayer | NCM | 0.29-0.34 |
| H | 90 wt% boron; 10 wt% Kraton 1924 FG | Triple bilayer | NCM | 0.33-0.63 |
| I | N/A | Triple bilayer | NCM | 1.6-2.1 |

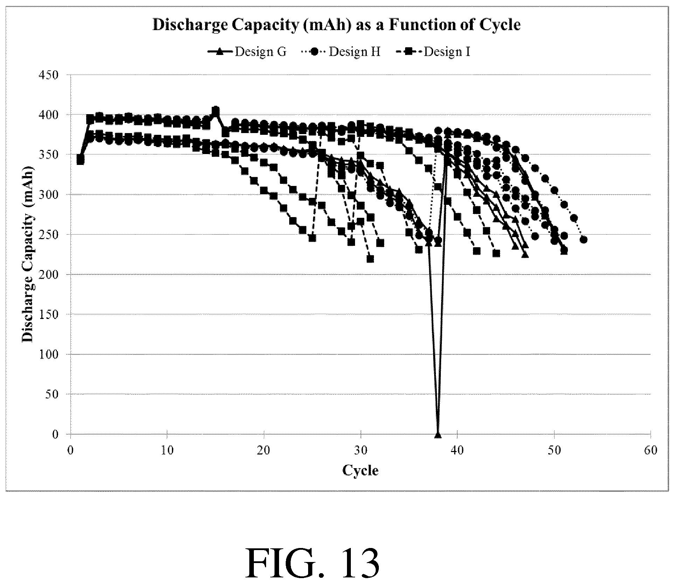

Cells that included the composite protective layer had a longer cycle life and lower impedance than cells that did not include the composite protective layer (see FIG. 13). Initial impedances of composite protective layer-containing cells were between 0.3 Ohms and 1 Ohms. Control cells, which did not contain the composite protective layer, had initial impedances between 1.6 Ohms and 2.1 Ohms. The cycle life of cells including an electrode comprising a composite protective layer was between 60% and 170% larger than control cells lacking the composite protective layer.

### EXAMPLE 7

This Example describes the formation of electrochemical cells including electrodes comprising composite protective layers comprising particles as indicated in table 4.

Composite protective layers were formed by depositing a 5-20% slurry comprising particles (see table 4), a fluid, and polymer binder (e.g. Kraton 1924 FG or styrene-butadiene rubber) onto a first separator (Celgard 2400), said first separator being disposed on a PET layer which is disposed on a glass carrier. The particles were either exclusively nanographite particles (for details see table 4), or a mixture of nanographite particles and boron particles where the boron particles made up between 25 wt% and 75 wt% of the total particle mass. Slurries were deposited using an air brushing technique or a Mayer rod, and uniformly coated the surface of the first separator. The coating was allowed to air dry for several hours, and the obtained composite protective layer/first separator/PET layer/glass carrier structure was then placed in a vacuum oven for several hours at a reduced pressure and at a temperature between room temperature and 130 °C. A 2-3 µm-thick Li layer was then sputtered onto the surface of the composite protective layer thus forming a Li/composite protective layer/first separator/PET layer/glass carrier structure. A 15 µm-thick vapor deposited Li anode disposed on a surface of a current collector was then laminated with the Li/composite protective layer/first separator/PET layer/glass structure. The obtained current collector/Li/Li/composite protective layer/first separator/PET layer structure was released from the glass carrier. The PET layer was then peeled back or removed from the first separator layer. A second separator (a 9 µm-thick Tonen separator) was placed between the first separator and an NCM cathode to form a current collector/Li/Li/composite protective layer/first separator/second separator/cathode structure.

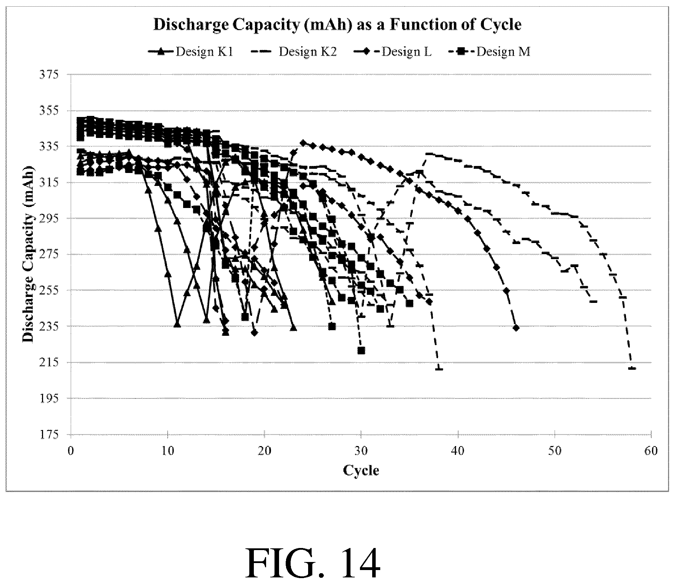

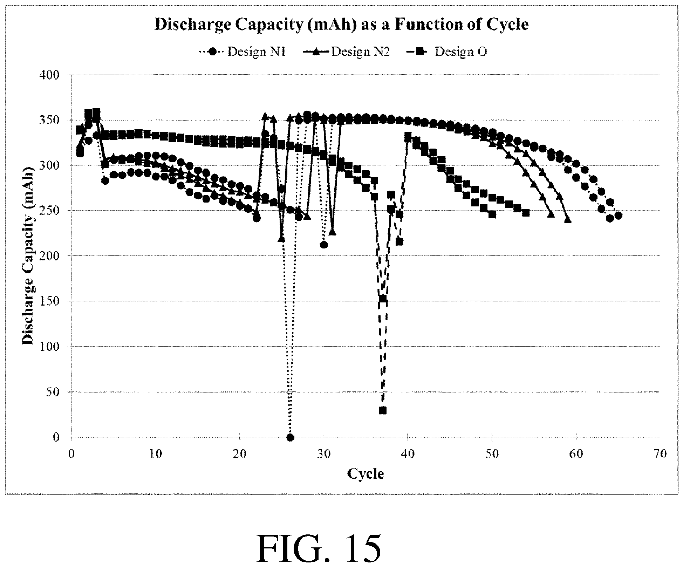

Control electrochemical cells were fabricated by the procedure described below. A first separator (Celgard 2400) was allowed to air dry for several hours before being placed in a vacuum oven for several hours at a reduced temperature and at a temperature between room temperature and 130 °C. A 2-3 µm Li layer was then sputtered on the first separator. A 15 µm vapor deposited lithium anode disposed on the surface of a current collector was then laminated with the lithium-coated first separator. Thus, a current collector/Li/Li/first separator structure was obtained. A second separator (9 µm thick Tonen separator) was placed between the first separator and an NCM cathode. Triple bilayer cathode-centered cells were assembled and cycled. Table 4, below, describes the properties of the cells and control cell having design M. FIG. 14 shows the cycle lives of cells having designs K1, K2, and L, resp., and control cells having design O; FIG. 15 shows the cycle lives of cells having design N1 resp. N2 and control cell having design O.

**Table 4**

| Cell design | Protective layer composition | Bilayer or triple bilayer | Cathode type | Initial cell impedance (Ohms) |
|---|---|---|---|---|
| K1 | 90 wt% nanographite particles; 10 wt% Kraton 1924 FG (formed by air brushing) | Triple bilayer | NCM | 0.26-0.41 |
| K2 | 90 wt% nanographite particles: 10 wt% Kraton 1924 FG (formed by Mayer rod) | Triple bilayer | NCM | 0.47-0.63 |
| L | 80 wt% nanographite particles; 20 wt% Kraton 1924 FG (formed by air brushing) | Triple bilayer | NCM | |
| M | N/A | Triple bilayer | NCM | 1.22-5.09 |
| N1 | 90 wt% nanographite particles; 10 wt% Kraton 1924 | Triple bilayer | NCM | 0.26-0.63 |
| N2 | 90 wt% nanographite particles and boron particles; 10 wt% Kraton 1924 FG | Triple bilayer | NCM | 0.26-0.63 |
| O | N/A | Triple bilayer | NCM | 1.22-5.09 |

Cells that included the composite protective layer had a longer cycle life and lower impedance than cells that did not include the composite protective layer (see FIGs. 14-15 and Table 4).

## Claims

1. An article for producing an electrochemical cell, comprising
- a layer comprising lithium metal;
and
- adjacent said layer comprising lithium metal, a composite protective layer comprising particles and a polymeric binder, wherein the particles comprise one or more materials selected from the group consisting of lithium transition metal oxides, titanium oxide, graphite, boron, boron carbide, silicon carbide, rare earth metal carbides, transition metal carbides, boron nitride, silicon nitride, rare earth metal nitrides, and transition metal nitrides.

2. Article according to claim 1, wherein
wherein said polymeric binder is selected from the group consisting of block copolymers, preferably form the group consisting of styrene-butadiene rubbers.

3. Article according to any preceding claim, wherein
the electronic conductivity of the protective composite layer is greater than or equal to 10⁻⁶ S/cm.

4. Article according to any of claims 1 to 3, comprising
- a first layer comprising lithium metal;
- adjacent said first layer comprising lithium metal, a composite protective layer as defined in any of claims 1 to 3;
- a second layer comprising lithium metal adjacent said first layer comprising lithium metal, said second layer comprising lithium metal being positioned at a surface of the first layer comprising lithium metal opposite the composite protective layer.

5. Article according to any of claims 1 to 4, further comprising
- a polymer layer adjacent said composite protective layer, said polymer layer being positioned at a surface of the composite protective layer opposite said layer comprising lithium metal;
- a removable carrier adjacent said polymer layer, said removable carrier being positioned at a surface of the polymer layer opposite the composite protective layer.

6. Article according to any of claims 1 to 4, further comprising
- a polymer layer adjacent said composite protective layer, said polymer layer being positioned at a surface of the composite protective layer opposite the layer comprising lithium metal, said polymer layer comprising one or more polymers which are swellable or soluble in an aprotic electrolyte;
- an electronically insulating porous layer adjacent said polymer layer, said electronically insulating porous layer being positioned at a surface of the polymer layer opposite the composite protective layer.

7. Article according to any of claims 1 to 4, further comprising
- an electronically insulating porous layer adjacent said composite protective layer, said electronically insulating porous layer being positioned at a surface of the composite protective layer opposite the layer comprising lithium metal.

8. Article according to claim 7, further comprising
- a polymer layer adjacent said electronically insulating porous layer, said polymer layer being positioned at a surface of the electronically insulating porous layer opposite the composite protective layer;
- a removable carrier adjacent said polymer layer, said removable carrier being positioned at a surface of the polymer layer opposite the electronically insulating porous layer.

9. Article according to any of claims 1 to 3, comprising
- a first layer comprising lithium metal;
- adjacent said first layer comprising lithium metal, a composite protective layer as defined in any of claims 1 to 3;
- a second layer comprising lithium metal, said second layer comprising lithium metal being positioned at a surface of the composite protective layer opposite the first layer comprising lithium metal.

10. An electrochemical cell, comprising
- an article as defined in any of claims 1 to 4, 6 and 7
or
- a layer comprising lithium metal and adjacent said layer comprising lithium metal a composite protective layer as defined in any of claims 1 to 3.

11. Use of an article according to any of claims 1 to 9 for producing an electrochemical cell.

12. A process of forming an article as defined in any of claims 1 to 9, comprising:
- providing a substrate
- forming on a surface of said substrate a composite protective layer as defined in any of claims 1 to 3 and forming a layer comprising lithium metal adjacent said composite protective layer at a surface of the composite protective layer opposite the substrate
or
- providing a substrate
- forming on a surface of said substrate a layer comprising lithium metal and forming a composite protective layer as defined in any of claims 1 to 3 adjacent said layer comprising lithium metal at a surface of the layer comprising lithium metal opposite the substrate.

13. Process according to claim 12, comprising
- providing a substrate
- forming on a surface of said substrate a composite protective layer as defined in any of claims 1 to 3
- forming a first layer comprising lithium metal adjacent said composite protective layer at a surface of the composite protective layer opposite the substrate
- providing a second layer comprising lithium metal deposited on a support
- laminating said second layer comprising lithium metal onto the first layer comprising lithium metal so that a surface of said first layer comprising lithium opposite said composite protective layer is positioned adjacent a surface of said second layer comprising lithium opposite said support.

14. Process according to any of claims 12 and 13, wherein
- said substrate comprises a layer comprising lithium metal, and said composite protective layer is formed on a surface of said layer comprising lithium metal;
or
- said substrate comprises an electronically insulating porous layer, and said composite protective layer is formed on a surface of said electronically insulating porous layer;
or
- said substrate comprises a polymer layer and an electronically insulating porous layer adjacent said polymer layer, said polymer layer comprising one or more polymers selected from the group of polymers which are swellable or soluble in an aprotic electrolyte; and said composite protective layer is formed on a surface of the polymer layer opposite said electronically insulating porous layer;
or
- said substrate comprises a polymer layer and a removable carrier adjacent said polymer layer; and said composite protective layer is formed on a surface of said polymer layer opposite the removable carrier.

15. Process according to claim 12, comprising
- providing a substrate comprising a first layer comprising lithium metal deposited on a support
- forming on a surface of said substrate a composite protective layer as defined in any of claims 1 to 3
- and forming a second layer comprising lithium metal adjacent said composite protective layer at a surface of the composite protective layer opposite the first layer comprising lithium metal.
